# FASCICULE DE BREVET EUROPEEN

(11) **EP 2 928 124 B1**
(45) Date de publication et mention de la délivrance du brevet: **28.04.2021**
(21) Numéro de dépôt: 15160223.2
(22) Date de dépôt: 23.03.2015
(51) Int. Cl.: H04L 12/58, H04L 29/06

(54) **Procédé de construction d'un message par un terminal**
VERFAHREN ZUR ERSTELLUNG EINER NACHRICHT DURCH EIN ENDGERÄT
METHOD FOR CONSTRUCTING A MESSAGE BY A TERMINAL

(30) Priorité: 31.03.2014 FR 1452846
(43) Date de publication de la demande: 07.10.2015
(73) Titulaire: ORANGE, 75015 Paris (FR)
(72) Inventeur: Dijoux, Geneviève, 75018 PARIS (FR); Lemaitre, Cyrielle, 92000 NANTERRE (FR); Bendiabdallah, Halim, 92420 VAUCRESSON (FR)
(74) Mandataire: Cabinet Beau de Loménie

(56) Documents cités:
- WO-A1-02/087267
- GB-A- 2 359 640

## Description

### Arrière-plan de l'invention

L'invention se rapporte au domaine général des applications logicielles.

Elle concerne plus particulièrement un mécanisme permettant d'enrichir les fonctionnalités d'une application logicielle à caractère ludique installée sur un terminal d'un utilisateur, et notamment sur un terminal mobile comme par exemple un téléphone Intelligent ou « smartphone » en anglais, une tablette numérique, etc.

On assiste aujourd'hui à un engouement des utilisateurs pour les jeux électroniques ou vidéos, et plus particulièrement pour les jeux que les utilisateurs peuvent installer sur leurs terminaux mobiles.

Ces jeux installés sur les terminaux des utilisateurs sont généralement à caractère individuel, c'est-à-dire qu'ils proposent des défis destinés exclusivement à un seul joueur (i.e. l'utilisateur du terminal) et ne permettent pas à plusieurs utilisateurs de communiquer ou d'interagir directement entre eux.

Certains jeux sont dotés d'une fonctionnalité leur permettant de publier les scores atteints par les utilisateurs sur un serveur web ou un serveur d'un réseau social de sorte à partager ce score avec d'autres utilisateurs. Toutefois les interactions entre les utilisateurs restent limitées.

Les inventeurs ont donc constaté qu'il n'existe pas aujourd'hui dans l'état de la technique de procédé permettant d'associer sur des terminaux, et notamment sur des terminaux mobiles, un jeu proposant un défi (c'est-à-dire un programme ou une application logicielle à caractère ludique) et un logiciel ou un service de communication permettant à des utilisateurs de communiquer avec d'autres utilisateurs, par exemple par message.

Le document GB 2359 640 décrit un procédé et un système de diffusion d'informations pouvant être appliqué dans le cadre d'un jeu en ligne.

### Objet et résumé de l'invention

L'invention propose un mécanisme qui, en s'appuyant sur des principes techniques d'un jeu (via la production d'un défi et la présentation de ce défi à un utilisateur destinataire), offre un nouveau mode d'interaction entre deux utilisateurs ou plus pour la mise en œuvre de tels jeux, en tirant profit de l'existence de services de communication par message disponibles dans un réseau de télécommunications, tel que notamment dans un réseau de télécommunications mobile.

Ce mécanisme s'appuie sur trois entités distinctes ainsi que sur les procédés mis en œuvre par ces entités, à savoir un terminal d'un utilisateur émetteur d'un message dans lequel sont insérées des données de définition d'un défi (i.e. d'un challenge), et au moyen duquel l'utilisateur émetteur peut partager un contenu multimédia avec un autre utilisateur dit destinataire, le terminal de l'utilisateur destinataire qui est apte à présenter (c'est-à-dire à exécuter) le défi proposé par l'utilisateur émetteur à l'utilisateur destinataire, et un serveur placé en coupure de flux entre le terminal de l'utilisateur émetteur et le terminal de l'utilisateur destinataire et qui est apte à fournir le contenu multimédia au terminal de l'utilisateur destinataire.

Par contenu multimédia, on entend ici tout type de contenu numérique comme par exemple un contenu audio ou vidéo, un texte ou encore une image.

Plus spécifiquement, l'invention est définie par les revendications indépendantes ci-jointes.

Par données d'accès au contenu multimédia, on entend ici soit le contenu multimédia lui-même, soit des données telles que par exemple une adresse ou une URL (Uniform Resource Locator) permettant d'accéder au contenu multimédia sur une entité locale ou distante.

L'invention vise à enrichir les possibilités d'interactions entre plusieurs utilisateurs au travers de jeux se présentant sous la forme de défis. La mise en oeuvre de l'invention fait appel à un module de définition de défi sur le terminal émetteur du message, ce module de définition de défi étant capable de générer des métadonnées définissant un défi et de transmettre ces métadonnées à destination d'un utilisateur destinataire, pour traitement et décodage des métadonnées du défi par un module correspondant - dit module de présentation de défi - exécuté sur le terminal de l'utilisateur destinataire.

Le défi ainsi créé est destiné à accompagner un contenu multimédia sélectionné par l'utilisateur émetteur pour l'utilisateur destinataire rendant ludique l'accès à ce contenu par l'utilisateur destinataire. L'utilisateur peut notamment dans ce contexte choisir des contenus multimédia qui ne revêtent pas de caractère d'urgence ou d'importance.

Par « métadonnées définissant relativement à un contenu multimédia un défi à présenter à un utilisateur destinataire », on entend ici que les métadonnées définissent un défi destiné à encadrer la fourniture du contenu multimédia à l'utilisateur destinataire. Ce défi peut ainsi par exemple conditionner la restitution (i.e. présentation) à proprement parler du contenu multimédia à l'utilisateur destinataire, ou proposer une restitution partielle de ce contenu multimédia ou une restitution d'une version transformée du contenu multimédia (ex. résultant d'une troncature, d'un brouillage ou d'un masquage de certaines parties du contenu), le contenu multimédia dans son intégralité étant fourni à l'utilisateur destinataire en cas de résolution avec succès du défi par celui-ci. Le défi défini par les métadonnées peut être indépendant du contenu multimédia (ex. une question quelconque, une devinette) ou être défini à partir de celui-ci (ex. un puzzle construit à partir du contenu multimédia à reconstituer, une image tronquée du contenu multimédia à deviner, etc.).

Les métadonnées d'un défi sont des données de définition de ce défi qui définissent (c'est-à-dire décrivent) explicitement ou de manière codifiée au moins un défi et la réponse attendue à ce défi. Il s'agit de données alphanumériques (i.e. de type texte), conformes préférentiellement à une logique de codification commune au module de définition de défi et au module de présentation de défi installé sur le terminal dudit au moins un utilisateur destinataire, afin de limiter la quantité d'informations devant être transmises au terminal de l'utilisateur destinataire pour permettre l'exécution du défi.

En d'autres termes, les métadonnées regroupent les informations requises pour l'exécution du défi par le module de présentation de défi installé sur le terminal dudit au moins un utilisateur destinataire du message.

Ces métadonnées peuvent comprendre notamment le type de défi proposé par l'utilisateur émetteur, des paramètres de ce défi comme par exemple des questions posées lors de la présentation (c'est-à-dire lors de l'exécution) du défi pour un défi de type quizz ou QCM, la réponse attendue au défi, la position des pièces du puzzle pour un défi de type puzzle, etc.

Elles peuvent aussi comprendre une durée maximale pour fournir une réponse au défi suite à une présentation du défi à un dit utilisateur destinataire. Cette caractéristique permet d'ajouter une dimension ludique supplémentaire au défi proposé par l'utilisateur émetteur à l'utilisateur destinataire du message.

Les métadonnées peuvent également servir à identifier au moins une opération à exécuter suite à la présentation du défi par le module de présentation de défi installé sur le terminal de l'utilisateur destinataire, selon qu'une réponse fournie par ledit au moins un utilisateur destinataire correspond ou non à la réponse attendue.

Elles peuvent en outre comprendre selon le type de défi envisagé, une information représentative de la nature dudit au moins un contenu multimédia, permettant ainsi au module de présentation de défi installé sur le terminal de l'utilisateur destinataire d'utiliser un module de restitution approprié du contenu multimédia.

L'invention propose ainsi une alternative ludique aux services de communication actuels, tels que les services de communication par SMS (Short Messaging Service) ou par MMS (Multimedia Messaging Service). Elle étend avantageusement les capacités des services existant actuellement sur les réseaux de communications mobiles en proposant une nouvelle expérience aux utilisateurs, tout en restant compatibles avec ces services.

L'invention permet en effet à un utilisateur d'un terminal de créer ses propres défis grâce à son terminal, au moyen par exemple d'une interface utilisateur prévue à cet effet. Le défi peut consister à cacher un contenu multimédia dans le défi ainsi créé, et à présenter à un destinataire de son choix le défi et le contenu multimédia caché dans le défi. La résolution avec succès du défi (en d'autres mots la fourniture de la réponse attendue au défi, également incluse dans les métadonnées du défi) permet à l'utilisateur destinataire du message d'accéder au contenu multimédia que lui a envoyé l'utilisateur émetteur. L'expérience des utilisateurs en matière de communications est ainsi enrichie, les interactions entre les utilisateurs devenant ludiques grâce à l'invention.

Différents types de défis peuvent être aisément produits par l'utilisateur émetteur via son terminal, comme par exemple :
- des puzzles élaborés à partir du contenu multimédia sélectionné par l'utilisateur,
- des tests aveugles, des tests de type quiz ou des questions à choix multiples en relation ou non avec le contenu multimédia,
- des photographies mystères ou plus généralement un contenu multimédia mystère qui présente à l'utilisateur destinataire le contenu multimédia sélectionné par l'utilisateur émetteur après lui avoir fait subir une transformation (ex. troncature, brouillage ou masquage de certaines parties du contenu).
- etc.

Préférentiellement, ces défis sont choisis de façon à être simples et rapides à exécuter par l'utilisateur destinataire du message.

Dans un mode particulier de réalisation, le défi peut être sélectionné par l'utilisateur émetteur parmi un catalogue de défis prédéterminés adapté audit au moins un utilisateur destinataire du message.

Ce catalogue de défis peut être mis à jour avec au moins un nouveau défi choisi pour ledit au moins un utilisateur destinataire après réception d'un message du serveur. Ce message informe par exemple l'utilisateur émetteur des succès ou des échecs de l'utilisateur destinataire à résoudre les défis qu'il lui propose.

L'utilisateur émetteur peut ainsi personnaliser son message.

Ainsi, conformément à l'invention, le module de présentation de défi installé sur le terminal de l'utilisateur destinataire est apte à analyser et interpréter les métadonnées de défi reçues pour :
- présenter à l'utilisateur destinataire au moins une page d'interface utilisateur avec un défi auquel il doit répondre, en combinant un patron de page d'interface utilisateur avec les métadonnées, et optionnellement (en fonction du type de défi considéré) le contenu multimédia défini par l'utilisateur émetteur ;
- obtenir la réponse fourni par cet utilisateur et déterminer si la réponse donnée est bonne ou mauvaise, et
- déclencher
- une restitution dudit au moins un contenu multimédia.

Ainsi, conformément à l'invention, lors de la présentation d'un défi par le terminal de l'utilisateur destinataire, une succession de pages d'interface utilisateur est présentée à l'utilisateur destinataire.

La mise en page d'une de ces pages d'interface utilisateur utilisées pour la présentation d'un défi est de préférence prédéfinie à partir d'un modèle d'interface utilisateur ou patron (en anglais « template »). Chaque page d'interface utilisateur comprend une pluralité d'éléments participant à la présentation du défi à l'utilisateur destinataire (comme par exemple pour un défi de type quiz, une liste proposant différents choix de réponses parmi laquelle figure la réponse attendue au défi, etc.). La disposition et la taille de ces éléments apparaissant sur chaque page d'interface utilisateur ainsi que la succession des différentes pages sont prédéfinies pour un type de défi donné, de sorte que seul l'élément devant être présenté à l'endroit choisi sur une page pour cet élément a besoin d'être spécifié par l'utilisateur émetteur pour que le défi puisse être présenté à l'utilisateur destinataire sous une forme compréhensible et utilisable. Ainsi seuls quelques paramètres du défi (incluant les éléments à afficher sur les pages d'interface utilisateur) et un ou des contenus multimédia doivent être transmis par message d'un terminal à l'autre pour la mise en oeuvre d'un défi, et non des pages d'interface utilisateur complètes.

Le type de défi et les paramètres du défi précités sont avantageusement décrits dans les métadonnées d'un défi qui sont transmises d'un terminal à l'autre. Des pages complètes d'interface utilisateur n'ayant pas besoin d'être transmises, la quantité d'informations à transmettre du terminal de l'utilisateur émetteur vers le terminal de l'utilisateur destinataire est réduite.

A réception des métadonnées d'un défi, le ou les patrons de pages d'interface utilisateur associé au type de défi identifié dans les métadonnées sont alors utilisés par le module de présentation de défi du terminal de l'utilisateur destinataire, modifiés à partir des métadonnées du défi de sorte à générer une ou des pages d'interface utilisateur à présenter lors de la présentation du défi.

Comme mentionné précédemment, selon un mode particulier de réalisation, les métadonnées de défi sont des données alphanumériques conformes à une logique de codification commune au module de définition de défi du terminal de l'utilisateur émetteur et au module de présentation de défi du terminal de l'utilisateur destinataire.

Par exemple un code alphanumérique sur un ou deux octets peut être utilisé pour coder le type de défi et un déroulement associé à ce type de défi, c'est-à-dire une succession de pages d'interface utilisateur associée. De la sorte, la quantité d'informations à transmettre d'un terminal d'un utilisateur à un autre est réduite.

Selon un troisième aspect, l'invention vise également un système comprenant un serveur , qui joue ainsi le rôle de proxy entre le terminal de l'utilisateur émetteur du message et le terminal de l'utilisateur destinataire. Il stocke avantageusement le ou les contenus multimédia sélectionnés par l'utilisateur émetteur pour l'utilisateur destinataire de sorte à limiter la quantité de données envoyée vers le terminal de l'utilisateur destinataire. Le ou les contenus multimédia peuvent ainsi être téléchargés par le terminal de l'utilisateur destinataire uniquement lorsque l'utilisateur destinataire envisage d'exécuter le défi qui lui est proposé, en préalable de cette exécution.

Il convient de noter que du point de vue de l'utilisateur émetteur à l'origine du message, la présence du serveur est transparente. L'utilisateur émetteur continue de sélectionner le destinataire de son message comme il le fait pour n'importe quel message envoyé depuis son terminal (tel que par exemple pour un message répondant à la norme de téléphonie mobile).

Dans un mode particulier de réalisation, ledit au moins un contenu multimédia est transmis au serveur dans le message contenant les métadonnées. Ce message est par exemple une requête HTTP (HyperText Transfer Protocol) de type POST, connue en soi. Cette transmission « groupée » facilite le traitement des données envoyées par le terminal émetteur (métadonnées et contenu(s) multimédia) par le serveur.

Dans un autre mode de réalisation, ledit au moins un contenu multimédia est transmis au serveur dans un message distinct du message contenant les métadonnées. Les métadonnées sont par exemple transmises dans une requête HTTP de type GET tandis que le ou les contenu(s) multimédia sont transmis dans une requête HTTP de type POST utilisant en paramètre un identifiant fourni par le serveur lui permettant d'associer les métadonnées reçues dans la requête de type GET au(x) contenu(s) multimédia reçu(s) dans la requête de type POST.

En variante, les métadonnées et/ou les contenus multimédias peuvent être envoyés selon un autre format de message, comme notamment un message SMS, un message MMS, un format de message accepté dans une suite de communication, telle que par exemple une suite de communication enrichie RICH ou « Joyn ® », un format de message accepté par un réseau social, tel que par exemple « Facebook ® », etc.

Dans un mode particulier de réalisation, le procédé de traitement comprend :
- une étape de vérification que le terminal dudit au moins un utilisateur destinataire du message est équipé d'un module de présentation de défi apte à présenter le défi défini par les métadonnées ;
- si le terminal dudit au moins un utilisateur destinataire n'est pas équipé du module de présentation de défi, une étape d'envoi d'un message invitant ce terminal à installer ce module de présentation de défi ;
le message comprenant les métadonnées étant envoyé au terminal lorsque le module de présentation de défi est installé sur celui-ci.

Ce mode de réalisation s'accommode avantageusement du fait que tous les terminaux ne sont pas nécessairement équipés pour interpréter et traiter les métadonnées émises par le terminal émetteur, et exécuter le défi défini dans ces métadonnées. Il propose à cet effet de mettre en œuvre au niveau du serveur placé en coupure de flux entre les terminaux des utilisateurs émetteur et destinataire, une vérification visant à s'assurer que le terminal de l'utilisateur destinataire est bien capable de présenter à l'utilisateur destinataire le défi construit par l'utilisateur émetteur, et si ce n'est pas le cas, d'envoyer un message au terminal destinataire lui permettant d'installer un module de présentation de défi capable d'interpréter les métadonnées envoyées par message par le terminal de l'utilisateur émetteur.

Dans un mode particulier de réalisation, le procédé de construction comprend une étape d'enregistrement préalable du terminal de l'utilisateur émetteur auprès du serveur en tant qu'utilisateur d'un module de définition de défi et/ou d'un module de présentation de défi.

Cette étape d'enregistrement préalable permet de faciliter le traitement du message envoyé par le terminal de l'utilisateur émetteur au serveur. Elle permet au serveur d'identifier plus rapidement les terminaux compatibles avec l'invention, autrement dit ceux qui disposent d'un module de définition et de présentation de défi conformément à l'invention. Ainsi, par exemple, l'étape de vérification peut alors se limiter à la vérification que ledit au moins un utilisateur destinataire du contenu multimédia envoyé par le terminal de l'utilisateur émetteur est enregistré auprès du serveur.

En outre, ceci permet au serveur d'anticiper la vérification des terminaux compatibles avec l'invention, et ce dès l'enregistrement du terminal.

Dans un mode particulier de réalisation, l'étape d'enregistrement peut comprendre la fourniture au serveur d'une liste de contacts de l'utilisateur émetteur mémorisée sur le terminal dans laquelle est associée à l'identifiant de l'utilisateur destinataire un identifiant de terminal.

L'utilisateur émetteur n'est ainsi pas forcé de spécifier un identifiant de terminal lorsqu'il compose son message pour désigner l'utilisateur destinataire mais peut utiliser tout type d'identifiant dès lors que celui-ci est associé dans sa liste de contacts à un identifiant de terminal. Ceci rend plus convivial la composition du message par l'utilisateur émetteur.

Dans un mode particulier de réalisation de l'invention du procédé de traitement, le message d'invitation est envoyé au second terminal via un réseau de télécommunications mobile. Il s'agit par exemple d'un message court de type SMS.

L'invention a ainsi une application privilégiée mais non limitative lorsque les terminaux sont des terminaux mobiles. En outre elle s'appuie avantageusement sur des supports de communication existant déjà sur ces terminaux, en l'occurrence ici un SMS.

Dans un mode particulier de réalisation, le procédé de traitement mis en oeuvre par le serveur comprend une étape de réception d'un message en provenance du terminal d'un dit utilisateur destinataire rapportant un échec ou un succès dudit utilisateur destinataire à fournir la réponse attendue au défi lors de la présentation de ce défi par le terminal.

Ce message peut permettre avantageusement au serveur de maintenir des scores pour les utilisateurs de sorte à les valoriser et les inciter à élucider les défis qui leur sont envoyés. Ainsi par exemple, le procédé de traitement mis en oeuvre par le serveur peut comprendre une étape de mise à jour d'un score associé audit au moins un utilisateur destinataire en fonction de l'échec ou du succès rapporté dans le message reçu du terminal de cet utilisateur destinataire.

Outre la valorisation des utilisateurs, les scores maintenus à jour par le serveur peuvent être utilisés pour proposer de nouveaux défis aux utilisateurs ou adapter les défis qui leur sont proposés, comme mentionné précédemment.

En variante, un score peut également être attribué à chaque utilisateur émetteur d'un message construit conformément à l'invention afin de valoriser les utilisateurs les plus actifs.

En variante, le message envoyé par le terminal de l'utilisateur destinataire peut permettre au serveur de débloquer le contenu multimédia présent dans le message construit conformément à l'invention en cas d'échec rapporté par ce terminal et suite à l'accord de l'utilisateur émetteur.

Dans un mode particulier de réalisation, le procédé de traitement mis en œuvre par le serveur comprend, après l'étape de mise à jour :
- une étape de classement dudit au moins un utilisateur destinataire en fonction de son score par rapport à une pluralité d'utilisateurs enregistrés auprès du serveur ; et
- une étape d'envoi du classement au terminal dudit au moins un utilisateur destinataire et/ou au terminal de l'utilisateur émetteur.

Dans un mode particulier de réalisation, les différentes étapes du procédé de construction d'un message et/ou du procédé de traitement et/ou du procédé de réception selon l'invention sont déterminées par des instructions de programmes d'ordinateurs.

En conséquence, l'invention vise aussi un programme d'ordinateur sur un support d'informations, ce programme étant susceptible d'être mis en oeuvre dans un terminal ou plus généralement dans un ordinateur, ce programme comportant des instructions adaptées à la mise en œuvre des étapes d'un procédé de construction d'un message tel que décrit ci-dessus.

L'invention vise également un programme d'ordinateur sur un support d'informations, ce programme étant susceptible d'être mis en œuvre dans un serveur ou plus généralement dans un ordinateur, ce programme comportant des instructions adaptées à la mise en œuvre des étapes d'un procédé de traitement tel que décrit ci-dessus.

L'invention concerne aussi un programme d'ordinateur sur un support d'informations, ce programme étant susceptible d'être mis en œuvre dans un terminal ou plus généralement dans un ordinateur, ce programme comportant des instructions adaptées à la mise en œuvre des étapes d'un procédé de réception tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un autre aspect, l'invention vise un système comprenant :
- un terminal d'un utilisateur dit émetteur conforme à l'invention ;
- au moins un terminal d'au moins un utilisateur dit destinataire selon l'invention ; et
- un serveur selon l'invention ;
le terminal de l'utilisateur émetteur étant apte à envoyer un message et des données d'accès à au moins un contenu multimédia au serveur, ce message comprenant des métadonnées définissant relativement audit au moins un contenu multimédia un défi à présenter audit au moins un utilisateur destinataire et une réponse attendue à ce défi, ledit serveur étant apte à retransmettre les métadonnées et ledit au moins un contenu multimédia audit au moins un terminal dudit au moins un utilisateur destinataire pour présentation de ce défi.

Le système dispose des mêmes avantages que ceux cités précédemment pour les terminaux et le serveur selon l'invention.

L'invention propose donc un nouveau service offrant un usage d'un réseau de télécommunications ludique, spontané, facile et convivial, ainsi qu'une nouvelle façon de communiquer entre les utilisateurs.

On peut également envisager, dans d'autres modes de réalisation, que le procédé de construction, le procédé de traitement, le procédé de réception, les terminaux, le serveur et le système selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 représente, de façon schématique, un terminal, un serveur et un système conformes à l'invention dans un mode particulier de réalisation ;
- la figure 2 représente l'architecture matérielle du terminal de la figure 1 ;
- la figure 3 représente l'architecture matérielle du serveur de la figure 1 ;
- la figure 4 illustre les principales étapes d'un procédé de construction d'un message et d'un procédé de traitement d'un message conformes à l'invention dans un mode particulier de réalisation dans lequel ils sont mis en œuvre respectivement par le terminal et par le serveur de la figure 1 ;
- la figure 5 illustre les principales étapes de construction d'un message mises en œuvre par le terminal de la figure 1 au cours du procédé de construction selon l'invention ; et
- les figures 6A à 6H illustrent des exemples de page d'interface utilisateur graphique utilisées pour la définition des métadonnées d'un défi et permettant la construction d'un message conformément à l'invention ;
- les figures 6H et 6I illustrent des exemples de pages d'interface utilisateur graphique qui peuvent être présentées à l'utilisateur destinataire lors de la présentation d'un défi.

### Description détaillée de l'invention

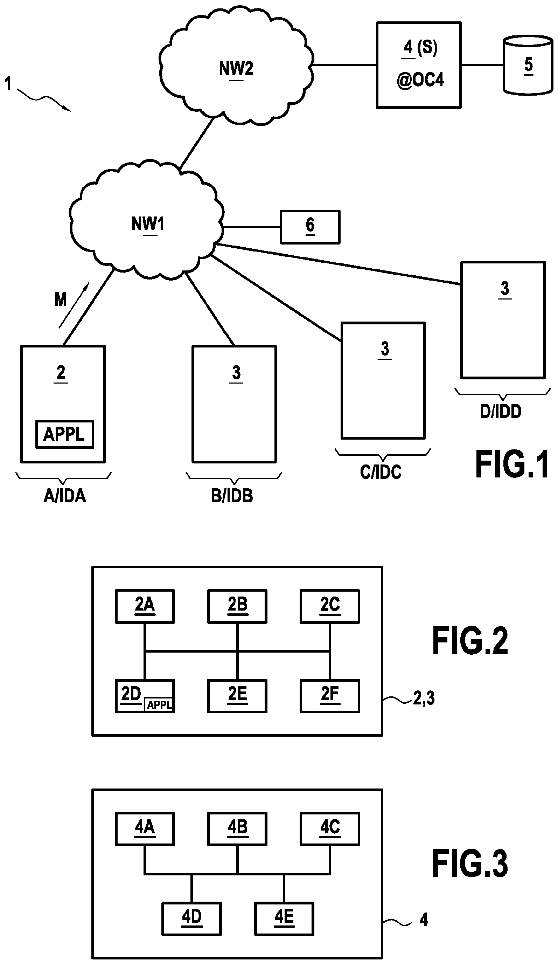

La **figure 1** représente, dans son environnement, un système 1 conforme à l'invention dans un mode particulier de réalisation.

Ce système offre un service S d'échange de messages « ludiques » entre un premier utilisateur A équipé d'un terminal 2 conforme à l'invention (terminal d'un utilisateur émetteur au sens de l'invention), et un second utilisateur B équipé d'un terminal 3 (terminal d'un utilisateur destinataire au sens de l'invention), basé sur la production et la présentation de défis accompagnant des contenus multimédia. Par contenu multimédia on entend tout type de contenu numérique et plus spécifiquement des contenus audio et/ou vidéo et des images.

Par souci de simplification dans la description, on considère un échange de messages entre deux utilisateurs seulement via leurs terminaux respectifs. Toutefois l'invention permet également l'échange de messages entre un nombre d'utilisateurs supérieur à 2 via leurs terminaux respectifs 3.

Aucune limitation n'est attachée à la nature des terminaux 2 et 3. Dans l'exemple envisagé à la figure 1, ces terminaux sont des téléphones intelligents, aussi connus sous l'appellation de « smartphones », aptes à communiquer sur un réseau de télécommunications mobiles NW1 tel que par exemple un réseau de troisième génération (ex. réseau UMTS) ou de quatrième génération. On suppose à cet effet qu'un identifiant IDA, respectivement IDB, a été alloué par l'opérateur du réseau de télécommunications mobiles NW1 à l'utilisateur A, respectivement à l'utilisateur B, pour communiquer sur le réseau NW1. Les identifiants IDA et IDB sont par exemple ici des numéros de téléphone.

Les terminaux 2 et 3 peuvent en variante être équipés d'autres interfaces de communication, telles que par exemple une interface de type WiFI (Wireless FIdelity), ou être aptes à communiquer sur des réseaux de télécommunications mobiles distincts.

Dans le mode de réalisation décrit ici, le terminal 2 est équipé d'une application logicielle APPL qui permet à l'utilisateur A de bénéficier du service S, et plus précisément, d'envoyer et de recevoir des contenus multimédia (ex. photographie, fichier texte, message de type texte, fichiers audio et/ou vidéo, etc.) accompagnés de défis dont la résolution déclenche la restitution de ces contenus multimédia. En d'autres mots, dans le mode de réalisation décrit ici, l'utilisateur destinataire d'un tel contenu multimédia ne peut y accéder dans son intégralité que s'il résout avec succès le défi qui y est attaché.

Ce défi est produit (i.e. défini ou construit) par l'utilisateur A à l'aide d'un module de définition de défi implémenté par l'application APPL, qui s'appuie ici sur une interface utilisateur graphique UI mise en oeuvre par l'application APPL et via laquelle l'utilisateur A peut interagir avec le module de définition de défi. Cette interface utilisateur UI offre un outil d'édition d'un message contenant un défi à l'utilisateur à la fois simple et facile d'utilisation. Le défi produit par l'utilisateur A est par exemple un quiz, un puzzle à reconstruire, un fichier audio tronqué ou une image cachée ou partiellement masquée qu'il faut identifier, une question à choix multiple, etc. Aucune limitation n'est attachée au type de défi envisagé lors de la mise en œuvre de l'invention.

Comme mentionné précédemment, l'application APPL permet également ici à l'utilisateur A d'accéder à des contenus multimédias émis par d'autres terminaux par l'intermédiaire de l'application APPL, autrement dit, accompagnés de défis à résoudre. Elle implémente donc également un module de présentation de défis définis dans le cadre du service S au sens de l'invention.

Conformément à l'invention, pour la mise en œuvre du service S, le système 1 comprend non seulement les terminaux 2 et 3 mais également un serveur 4 de traitement des messages émis par le terminal 2, conforme à l'invention.

Ce serveur 4 est en coupure de flux de tous les messages émis par le terminal 2 et construits par l'intermédiaire de l'application APPL. Il est accessible ici via un réseau public NW2, typiquement le réseau public Internet. L'adresse de contact du serveur 4 sur ce réseau NW2 (i.e. l'adresse avec laquelle il peut communiquer et est accessible) notée @oC4, est configurée dans l'application APPL.

En variante, l'adresse @oC4 est saisie dans une liste de contacts (répertoire) mémorisée sur le terminal 2 et accessible par l'application APPL.

On suppose ici que les échanges mis en œuvre entre l'application APPL installée sur le terminal 2 et le serveur 4 sont conformes aux protocoles HTTP (HyperText Transfer Protocol) et HTTPs (HyperText Transfer Protocol secure). Toutefois, en variante, d'autres protocoles peuvent être envisagés.

Dans le mode de réalisation décrit ici, le terminal 2 a l'architecture matérielle d'un ordinateur, telle qu'illustrée à la **figure 2****.** Il comprend notamment un processeur 2A, une mémoire morte 2B, une mémoire vive 2C, une mémoire non volatile 2D dans laquelle est mémorisée ici l'application APPL, des moyens de communication 2E sur le réseau de télécommunications mobiles NW1 lui permettant notamment de communiquer avec le serveur 4, et des moyens d'entrée/sortie 2F lui permettant d'interagir avec l'utilisateur A. Ces moyens d'entrée/sortie comprennent notamment ici un écran tactile, un clavier virtuel, ainsi que des moyens de restitution diverses de contenus multimédia, tels que par exemple des enceintes, un « player » vidéo, etc. L'interface utilisateur graphique UI mise en oeuvre par l'application APPL s'appuie avantageusement sur les moyens d'entrée/sortie 2F.

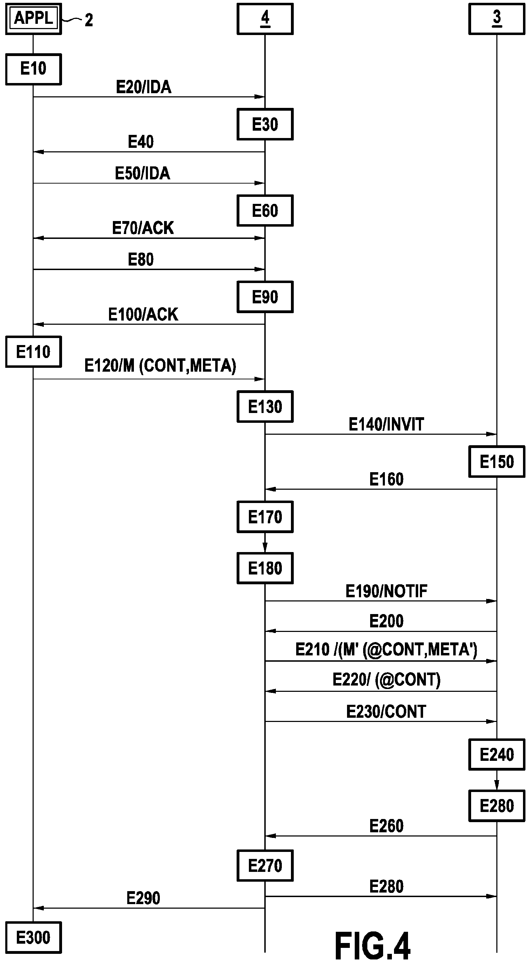

La mémoire morte 2B du terminal 2 constitue un support d'enregistrement lisible par le processeur 2A et sur lequel est enregistré un programme d'ordinateur conforme à l'invention, comportant des instructions pour l'exécution des étapes d'un procédé de construction d'un message selon l'invention, les étapes de ce procédé étant décrites ultérieurement en référence aux figures 4, 5 et 6A-6H dans un mode particulier de réalisation.

Ce programme d'ordinateur définit de façon équivalente des modules fonctionnels du terminal 2 (modules logiciels ici) et plus particulièrement de l'application logicielle APPL, tels qu'un module de sélection d'un contenu multimédia et d'un destinataire du message, un module de définition d'un défi (s'appuyant notamment sur l'interface utilisateur UI et sur les moyens d'entrée/sortie 2F du terminal 2) et un module d'envoi de ce message au serveur 4 via le réseau NW1 (s'appuyant notamment sur les moyens de communication 2E du terminal 2). Les fonctions de ces divers modules fonctionnels sont décrites plus en détail en référence aux étapes du procédé de construction.

La mémoire morte 2B est également un support d'enregistrement lisible par le processeur 2A et sur lequel est enregistré un programme d'ordinateur conforme à l'invention, comportant des instructions pour l'exécution des étapes d'un procédé de réception d'un message selon l'invention, les étapes de ce procédé étant décrites ultérieurement en référence aux figures 4, 5 et 6A-6I dans un mode particulier de réalisation.

Ce programme d'ordinateur définit de façon équivalente des modules fonctionnels du terminal 2 (modules logiciels ici) et plus particulièrement de l'application logicielle APPL, tels qu'un module de réception d'un message et de téléchargement d'un contenu multimédia (s'appuyant notamment sur les moyens de communication 2E du terminal 2), et un module de présentation d'un défi (s'appuyant notamment sur l'interface utilisateur UI et sur les moyens d'entrée/sortie 2F du terminal 2). Les fonctions de ces divers modules fonctionnels sont décrites plus en détail en référence aux étapes du procédé de réception.

Le terminal 3 a une architecture matérielle et fonctionnelle identique à celle du terminal 2. De façon similaire, le serveur 4 a également, dans le mode de réalisation décrit ici, l'architecture matérielle d'un ordinateur telle qu'illustrée à la **figure 3****.** Il comprend notamment un processeur 4A, un disque dur (ou une mémoire morte) 4B, une mémoire vive 4C, une mémoire non volatile 4D, des moyens de communication 4E sur le réseau public Internet NW2 et sur le réseau de télécommunications mobile NW1. Les moyens de communication 4E permettent au serveur 4 de communiquer notamment avec les terminaux 2 et 3 ainsi qu'avec d'autres entités telles que par exemple une base de données 5A, dans laquelle sont mémorisés diverses informations comme les utilisateurs enregistrés auprès du serveur 4 ayant souscrit au service S, leurs numéros de téléphone sur le réseau de télécommunications mobile NW1 (ou sur un autre réseau de télécommunications mobile), etc.

La mémoire non volatile 4D est ici le support d'enregistrement d'une base de données dans laquelle les métadonnées de définition de défis destinés aux utilisateurs enregistrés auprès du serveur 4, ainsi qu'un répertoire dans lequel sont mémorisés les contenus multimédias associés à ces défis. Le serveur 4 attribue à chaque contenu multimédia stocké dans ce répertoire un identifiant unique associé dans la base de données au défi correspondant, c'est-à-dire au défi destiné à être fourni à l'utilisateur destinataire du contenu multimédia. Chaque contenu multimédia stocké dans le répertoire est accessible via ici une adresse URL.

Le disque dur 4B du serveur 4 constitue un support d'enregistrement lisible par le processeur 4A et sur lequel est enregistré un programme d'ordinateur conforme à l'invention, comportant des instructions pour l'exécution des étapes d'un procédé de traitement d'un message selon l'invention, les étapes de ce procédé étant décrites ultérieurement en référence aux figures 4, 5 et 6A-6H dans un mode particulier de réalisation.

Ce programme d'ordinateur définit de façon équivalente des modules fonctionnels du serveur 4 (modules logiciels ici), tels qu'un module de réception d'un message composé avec l'application APPL contenant un défi et des données d'accès à un contenu multimédia en provenance du terminal 2, un module ici de vérification que le terminal de l'utilisateur destinataire du contenu multimédia est équipé d'un module de présentation de défi (par exemple de l'application APPL ici) lui permettant de lire et de traiter les métadonnées (autrement dit, de proposer le défi défini par ces métadonnées à l'utilisateur destinataire), un module d'envoi d'un message d'invitation à installer ce module de présentation de défi si le terminal destinataire n'en est pas équipé, un module de stockage apte à stocker le contenu multimédia dans le répertoire du serveur 4 et les métadonnées de défi dans la base de données du serveur 4, et un module d'envoi d'un message au terminal de l'utilisateur destinataire comprenant les métadonnées et l'adresse dans le répertoire du contenu multimédia associé (ou le contenu multimédia lui-même). Les modules de réception, d'invitation et d'envoi s'appuient notamment sur les moyens de communication 4E du serveur. Les fonctions de ces divers modules fonctionnels sont décrites plus en détail en référence aux étapes du procédé de traitement.

Nous allons maintenant décrire, en référence aux figures 4, 5 et 6A-6H, les principales étapes du procédé de construction d'un message, du procédé de traitement d'un message et du procédé de réception d'un message selon l'invention, dans un mode particulier de réalisation dans lequel ils sont mis en œuvre respectivement par le terminal 2, par le serveur 4, et par le terminal 3 de l'utilisateur B de la figure 1.

En référence à la **figure 4****,** on suppose que l'utilisateur A (utilisateur émetteur) souhaite partager un contenu multimédia avec l'utilisateur B (utilisateur destinataire), et décide à cette fin de lui envoyer un message construit (i.e. composé) avec l'application APPL. A cet effet, il lance l'application APPL installée sur son terminal 2, qui se connecte au serveur 4 dont elle connaît l'adresse de contact ou de joignabilité @oC4 comme mentionné précédemment (étape E10). Le lancement de l'application APPL se traduit par l'affichage d'une succession de pages d'interface utilisateur (ou fenêtres de composition) utilisées pour la construction d'un message et la définition d'un défi destiné à l'utilisateur B. Dans la suite de la description on utilise indifféremment les termes page d'interface utilisateur, fenêtre de composition ou encore fenêtre.

Lors de la première connexion de l'application APPL au serveur 4, l'application APPL s'authentifie et s'enregistre le cas échéant auprès du serveur 4 pour permettre à l'utilisateur A de bénéficier du service S.

Plus spécifiquement, l'application APPL installée sur le terminal 2 envoie au serveur 4, une requête d'authentification conforme au protocole HTTP et contenant le numéro de téléphone IDA de l'utilisateur A sur le réseau de télécommunications mobile NW1 (étape E20). Cette requête d'authentification est envoyée ici via le réseau de télécommunications NW1 et transite jusqu'au serveur 4 via le réseau public Internet NW2.

Sur réception de la requête d'authentification du terminal 2, le serveur 4 vérifie, en interrogeant la base de données 5 à l'aide de l'identifiant IDA contenu dans la requête d'authentification, si l'utilisateur A est enregistré et a souscrit au service S (étape E30).

Si l'identifiant IDA n'est pas associé dans la base de données 5 à un utilisateur ayant souscrit au service S (i.e. ici l'utilisateur A n'est pas enregistré auprès du serveur 4 en tant qu'utilisateur d'un service ou d'un module de définition et/ou de présentation de défis), le serveur 4 demande au terminal 2 de souscrire (i.e. de s'inscrire) au service S (étape E40). Cette demande est affichée sur un page de l'interface utilisateur UI de l'application APPL sur l'écran du terminal 2.

L'utilisateur A répond à cette demande en saisissant via les moyens d'entrée/sortie 2F du terminal 2 son numéro de téléphone IDA sur le réseau NW1 et son nom A. Ces informations sont transmises par le terminal 2, par le biais de l'application APPL, au serveur 4 dans une requête d'inscription ou de souscription au service S (étape E50).

Sur réception de la requête de souscription du terminal 2, le serveur 4 stocke dans la base de données 5 le numéro de téléphone IDA en association avec le nom A de l'utilisateur A (étape E60). L'utilisateur A est ainsi enregistré auprès du serveur 4. Un acquittement contenant un code est envoyé par le serveur 4 au terminal 2 afin que l'utilisateur A saisisse ce code depuis une page de l'interface UI de l'application APPL ; le code saisi par l'utilisateur A est renvoyé au serveur 4 pour vérification et activation le cas échéant du service S (étape E70). L'utilisateur A peut dès lors bénéficier du service S.

Il convient de noter que dans le mode de réalisation décrit ici, seuls les utilisateurs équipés de l'application APPL peuvent souscrire au service S et s'enregistrer auprès du serveur 4. En d'autres mots, pour pouvoir s'enregistrer auprès du serveur 4 et souscrire au service S, les utilisateurs doivent disposer d'un module de définition de défis et/ou d'un module de présentation de défis destinés à être fournis avec des contenus multimédias.

Dans le mode de réalisation décrit ici, lors de l'enregistrement de l'utilisateur A auprès du serveur 4, l'application APPL transmet également la liste des contacts de l'utilisateur A (i.e. son répertoire) mémorisée sur le terminal 2, par exemple dans sa carte SIM (Subscriber Identity Module) ou dans une autre mémoire du terminal, comme par exemple la mémoire non volatile 2D (étape E80). Cette liste de contacts comprend notamment une liste de numéros de téléphone et/ou d'identifiants sur divers réseaux de télécommunications fixes ou mobiles permettant d'identifier des terminaux, ainsi que les noms des personnes (i.e. identifiants d'utilisateurs) auxquelles sont associés ces numéros ou identifiants. Dans l'exemple envisage ici, elle comprend notamment le numéro de téléphone de l'utilisateur B sur le réseau NW1 et son nom (identifiants permettant d'identifier un terminal de l'utilisateur B au sens de l'invention).

Cette liste de contacts est reçue par le serveur 4 et sauvegardée dans la base de données 5, en association avec le nom de l'utilisateur A (étape E90). Un acquittement est ensuite envoyé au terminal 2 (étape E100).

Une fois l'enregistrement de l'utilisateur A et son authentification achevés, l'utilisateur A peut construire (i.e. composer) un message M en utilisant les pages de l'interface utilisateur UI prévues à cet effet par l'application APPL (étape E110). L'interface utilisateur graphique UI offre la possibilité à l'application APPL d'interagir avec l'utilisateur A pour construire le message M.

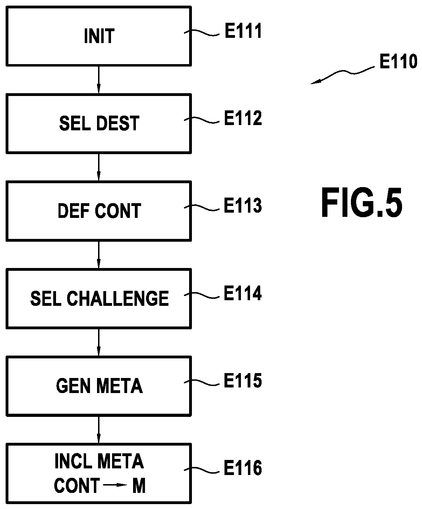

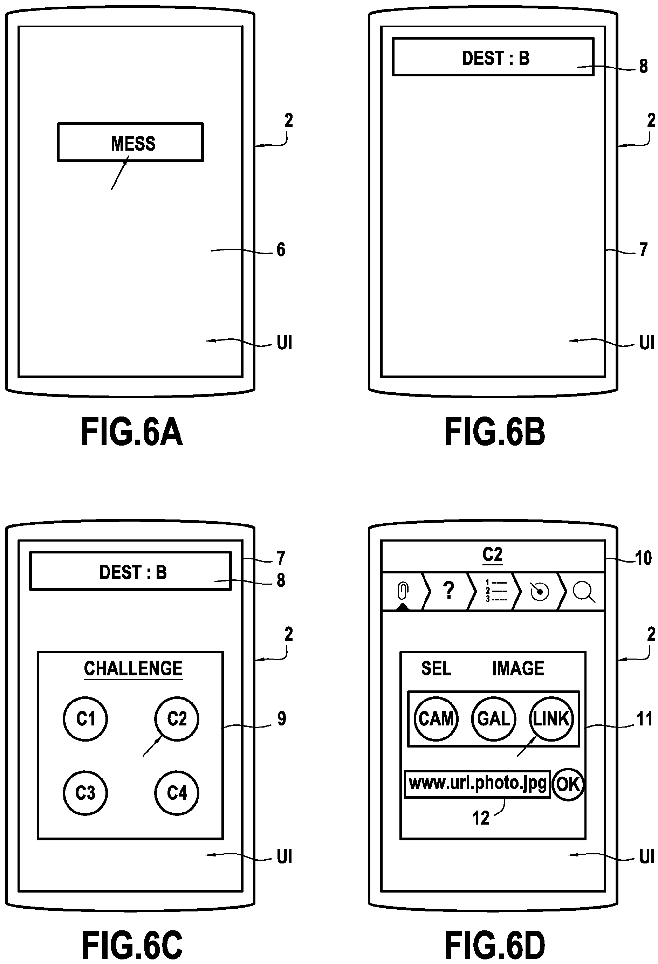

L'étape de construction du message M est représentée de façon détaillée à la **figure 5****.** A titre illustratif, des exemples de pages de l'interface utilisateur graphique UI permettant de guider l'utilisateur A tout au long de cette étape de construction du message M dans ses interactions avec l'application APPL sont représentés sur les **figures 6A-6H****.**

Ainsi, en référence à la figure 6A, l'interface utilisateur UI affiche sur l'écran du terminal 2 une page d'accueil 6 offrant la possibilité à l'utilisateur A de composer un nouveau message. L'utilisateur A accède à cette possibilité en désignant l'élément « MESS » affiché sur la page d'accueil, par exemple en appuyant sur cet élément avec son doigt pour un écran tactile ou avec un stylet prévu à cet effet (étape E111).

L'interface utilisateur UI ouvre alors sur l'écran du terminal 2 une nouvelle page d'interface utilisateur comprenant une fenêtre 7 de composition d'un nouveau message comme illustré à la figure 6B. Cette fenêtre comprend un cadre 8 dans lequel l'utilisateur A est invité à saisir l'utilisateur destinataire du contenu multimédia que souhaite partager l'utilisateur A, autrement dit de l'utilisateur destinataire du message. A cette fin, l'utilisateur A peut utiliser le clavier virtuel du terminal 2 ou, comme dans l'exemple envisagé ici, sélectionner l'utilisateur destinataire du message parmi la liste de ses contacts (i.e. son répertoire) mémorisée sur son terminal mobile 2.

On suppose ici que l'utilisateur A désigne (i.e. sélectionne) l'utilisateur B comme destinataire de son message parmi la liste de ses contacts. Cette désignation permet à l'application APPL de déterminer (i.e. obtenir) le destinataire du message en cours de construction (étape E112).

En variante, plusieurs utilisateurs destinataires du message peuvent être désignés de façon similaire par l'utilisateur A.

Suite à l'obtention du ou des utilisateurs destinataires du message M, une succession d'étapes visant à la définition d'un défi destiné à être présenté à ce ou ces utilisateurs destinataires est mise en œuvre conformément à l'invention par l'application APPL (et plus précisément par le module de définition de défi de l'application APPL).

Une nouvelle fenêtre 9 est ainsi tout d'abord affichée par l'interface utilisateur UI sur l'écran du terminal 2 proposant à l'utilisateur A différentes catégories de défis (ou challenges, ou encore jeux). Dans l'exemple illustré à la figure 6C, quatre catégories de défis prédéterminées C1, C2, C3 et C4 sont proposées à l'utilisateur A sur la fenêtre d'affichage 9. Par exemple, C1 est une catégorie de défis de type « tests aveugles », C2 est une catégorie de défis de type « photographies mystères », C3 est une catégorie de défis de type « puzzles » et C4 est une catégorie de défis de type « quiz ». Ces quatre catégories de défis C1, C2, C3, C4 constituent un catalogue de défis prédéterminés fourni par l'application APPL via l'interface UI à l'utilisateur A pour construire son message au sens de l'invention. Bien entendu, ces exemples ne sont donnés qu'à titre illustratif et d'autres types de défis peuvent être envisagés.

On suppose ici que l'utilisateur A sélectionne la catégorie de défis C2 sur l'écran tactile du terminal 2. Dans l'exemple envisagé ici, suite à cette sélection, une nouvelle fenêtre s'affiche sur la page d'interface utilisateur de sorte à permettre à l'utilisateur A de saisir s'il le désire, via le clavier de son terminal 2, une dédicace destinée à l'utilisateur B (ex. « Amuse-toi bien en résolvant ce nouveau défi », etc.) pour accompagner le défi.

Puis, l'interface utilisateur graphique UI de l'application APPL installée sur le terminal 2 propose à l'utilisateur A, par le biais d'une nouvelle page d'interface utilisateur 10 définissant une fenêtre de composition du message, de construire à proprement parler ce dernier. Cette étape de construction se décompose ici en plusieurs sous-étapes.

Tout d'abord, l'utilisateur A est invité par le biais d'une fenêtre 11 s'ouvrant dans la fenêtre de composition 10, à définir ou plus généralement à sélectionner un (ou plusieurs) contenu(s) multimédia(s) CONT qu'il souhaite adresser à l'utilisateur B. Ce contenu multimédia peut être de différentes natures : il peut s'agir d'une photographie, d'un fichier audio, d'un texte, d'un fichier vidéo, etc., autrement dit d'un contenu multimédia quelconque produit par l'utilisateur A (ex. texte saisi par l'utilisateur A, photographie prise par l'utilisateur A), mémorisé préalablement sur son terminal 2 ou sur tout autre support de stockage (ex. sur un serveur distant).

Dans le cadre du type de défi C2 sélectionné par l'utilisateur A (i.e. « photographie mystère »), le contenu multimédia sélectionné par l'utilisateur A est une photographie. Plusieurs options sont offertes ici par l'interface UI à l'utilisateur A pour choisir cette photographie comme illustré à la figure 6D, à savoir par exemple, l'utilisateur A peut décider de prendre une nouvelle photographie (en sélectionnant ici l'onglet CAM), de sélectionner une photographie déjà mémorisée dans le terminal 2 (en sélectionnant ici l'onglet GAL) ou de fournir un lien vers une photographie stockée sur un serveur distant (en sélectionnant ici l'onglet LINK).

On suppose ici que l'utilisateur A sélectionne l'onglet LINK. Cette sélection est suivie de l'affichage par l'interface utilisateur UI d'une fenêtre 12 de saisie du lien permettant d'accéder au contenu multimédia (photographie) choisi par l'utilisateur A. La saisie du lien www.url-photo.jpg par l'utilisateur A dans la fenêtre de saisie 12 achève l'obtention par l'application APPL d'une identification du contenu multimédia destiné à être transmis à l'utilisateur B (étape E113).

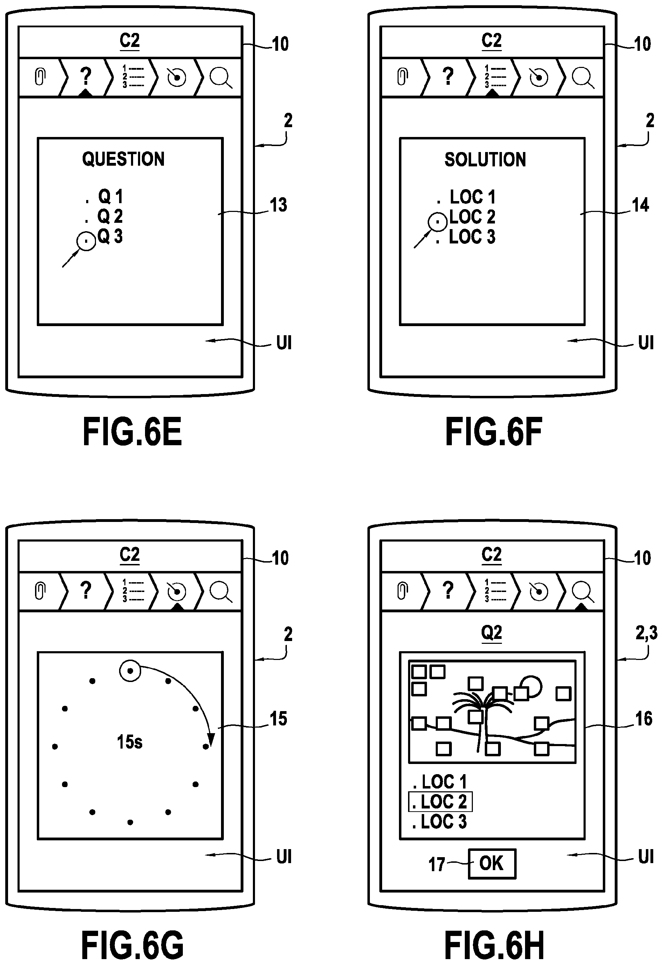

Une fois la définition du contenu multimédia terminée, l'interface utilisateur UI propose à l'utilisateur A de produire (i.e. construire) le défi et la réponse attendue à ce défi utilisés pour conditionner l'accès au contenu multimédia (étape E114). A cet effet, une nouvelle fenêtre d'affichage 13 est fournie par l'interface utilisateur UI sur laquelle sont listées plusieurs questions pouvant être associées à la photographie sélectionnée par l'utilisateur A dans le cadre du défi « photographie mystère ». Dans l'exemple illustré à la figure 6E, trois questions prédéterminées Q1= « qui est-ce ? », Q2 = « qu'est-ce que c'est ?» et Q3= « où est-ce ?» sont affichées dans la fenêtre 13. Les questions Q1, Q2, Q3 constituent un catalogue d'éléments prédéterminés fourni par l'application APPL via l'interface UI à l'utilisateur A pour construire son défi.

En variante, l'utilisateur A peut saisir ces questions par l'intermédiaire du clavier du terminal 2.

Dans une autre variante encore, les questions peuvent être prédéterminées et stockées dans la mémoire non volatile 2D du terminal. De manière plus générale, l'utilisateur A peut produire un défi pour l'utilisateur B à partir de défis préconçus et stockés dans une mémoire non volatile du terminal, qu'il est ensuite invité à personnaliser via l'outil d'édition et les pages d'interface (fenêtres de composition) offerts par l'interface utilisateur UI.

On suppose ici que l'utilisateur A sélectionne la question Q3.

Suite à cette sélection, l'interface utilisateur UI présente une fenêtre d'affichage 14 à l'utilisateur A sur l'écran du terminal 2 afin que celui-ci saisisse des réponses multiples destinées à être présentées à l'utilisateur B et incluant la réponse attendue au défi, c'est-à-dire à la question Q3. Dans l'exemple envisagé à la figure 6F, l'utilisateur A saisit, via le clavier virtuel du terminal 2, trois réponses possibles à savoir LOC1= « A la mer de sable », LOC2= « dans le désert d'Arizona », LOC3= « dans mon jardin ». Il indique par ailleurs quelle est la réponse attendue au défi, soit ici la réponse LOC2.

Dans le mode de réalisation décrit ici, l'utilisateur A a également la possibilité, par le biais de l'interface graphique UI, de fixer une durée maximale pour fournir la réponse attendue au défi. Cette durée peut être saisie par l'utilisateur à l'aide du clavier du terminal 2, ou comme illustré à la figure 6G, en faisant glisser son doigt sur une horloge représentée sur la fenêtre d'affichage 15 prévue par l'interface utilisateur à cet effet jusqu'à atteindre le temps souhaité (ex. 15 minutes dans l'exemple illustré).

La détermination de cette durée maximale achève la production du défi et de la réponse attendue à ce défi.

Il convient de noter que la réponse attendue au défi peut dépendre implicitement de la nature du défi sélectionné par l'utilisateur. Ainsi, lorsque le défi est un puzzle, la réponse attendue au défi est la reconstruction correcte du puzzle.

Les différentes interactions décrites entre l'utilisateur A et l'interface utilisateur UI participant à la définition d'un défi à présenter à l'utilisateur B et d'une réponse attendue à ce défi sont traduites par le module de définition de défi de l'application APPL en métadonnées META (étape E115). Les métadonnées META sont, au sens de l'invention, des métadonnées définissant relativement au contenu multimédia CONT sélectionné par l'utilisateur A, le défi et la réponse attendue au défi construits par l'utilisateur A via l'interface UI.

Ces métadonnées META sont des données alphanumériques (i.e. du texte) décrivant explicitement ou de manière codifiée le défi et la réponse attendue au défi définis par l'utilisateur A via l'interface utilisateur UI.

Plus précisément, elles définissent ici notamment le type (catégorie) de défi sélectionné par l'utilisateur A, les paramètres de ce défi (ex. les éléments constituant le défi, c'est-à-dire la question posée, et la réponse attendue au défi), au moins une opération à exécuter par le module de présentation de défi selon que la réponse fournie par le destinataire est la réponse attendue ou non, la durée maximale pour fournir une réponse au défi, etc.

Dans le contexte d'un défi de type quiz (catégorie C4) s'appuyant sur la restitution partielle du contenu multimédia, une information représentative de la nature du contenu multimédia CONT peut également être incluse dans les métadonnées de sorte à permettre au module de présentation du défi installé sur le terminal de l'utilisateur destinataire B (de l'application APPL ici) de sélectionner le bon module de restitution de contenu multimédia à la lecture des métadonnées.

Ces métadonnées se présentent ici sous la forme d'une liste d'identifiants ou de noms de champs d'informations et d'une valeur associée à chaque champ d'informations listé. Par exemple, un code alphanumérique sur un ou deux octets peut être utilisé pour coder chaque champ d'informations et la valeur associée à ce champ d'informations. Ces champs d'information sont par exemple :
- un champ de statut (ex. "status":"200 »),
- un identifiant de type de défi (ex. " gameType":"2"), associée à la catégorie de défi sélectionné par l'utilisateur A,
- un identifiant de l'utilisateur destinataire ou d'un terminal de l'utilisateur destinataire (ex. "contactPhoneNum":"33630350911"),
- une date de création du jeu ("creationDate":"2014-03-04 10:33:26"),
- un nombre de pièces d'un puzzle quand un défi de type puzzle est sélectionné par l'utilisateur (ex. "pieceNum":"1") et/ou la position des pièces de ce puzzle (réponse attendue au défi),
- une durée maximale pour fournir une réponse au défi, définie par exemple en secondes, (ex. "timer", "9"),
- un identifiant de la réponse attendue au défi (ex. "idChoice":"0"),
- un identifiant de type de média c'est-à-dire indiquant la nature du contenu multimédia sélectionné par l'utilisateur, lorsque le défi est de type quizz (ex. "MediaType"),
- un texte à présenter lors de la présentation du défi (ex. question posée dans le défi), etc.

Dans le mode de réalisation décrit ici, le module de définition du défi et le module de présentation du défi sont implémentés par l'application APPL, de sorte que les métadonnées utilisées par l'un sont compréhensibles et interprétables par l'autre. De manière générale, on s'assure que les métadonnées utilisées pour définir le défi et la réponse attendue au défi soient conformes à une logique de codification commune au module de définition de défi installé sur le terminal 2 de l'utilisateur A et au module de présentation de défi installé sur le terminal 3 de l'utilisateur B.

Les métadonnées META regroupent toutes les informations requises pour la présentation du défi défini par l'utilisateur A par le module de présentation de défi de l'application APPL installée le cas échéant sur le terminal de l'utilisateur B.

Dans le mode de réalisation décrit ici, à l'issue de l'étape de production du défi et de sa réponse, le module de définition de défi de l'application APPL offre à l'utilisateur A, par le biais de l'interface utilisateur UI, un aperçu du défi qui vient d'être produit et est destiné à être présenté à l'utilisateur B. La figure 6H illustre le défi correspondant aux choix de l'utilisateur représentés sur les figures 6A-6G, autrement dit d'une photographie mystère (i.e. partiellement masquée) dont l'accès est conditionné par une question à choix multiple. Les éléments de masquage de la photographie mystère sont définis de manière aléatoire par un algorithme prédéfini implémenté par le module de définition de défi. Le défi ainsi produit est présenté dans une fenêtre d'affichage 16 de l'interface utilisateur UI.

Si l'utilisateur A est satisfait, il peut valider la production du défi en appuyant sur le bouton OK 17.

Bien entendu, l'exemple décrit ici et représenté sur les figures 6A-6H n'est donné qu'à titre illustratif. Aucune limitation n'est attachée aux types de défis pouvant être utilisés par l'utilisateur A pour accompagner le contenu multimédia qu'il souhaite transmettre à l'utilisateur B, ni aux éléments de réponse, ni même au type de contenu multimédia. A chaque étape de la construction (production) du défi par l'application APPL via ses interactions avec l'utilisateur A, d'autres éléments (défis, réponses, questions, etc.) que ceux envisagés dans cet exemple peuvent être proposés à l'utilisateur A pour construire son défi par le biais de l'interface graphique UI. Il convient de noter par ailleurs que les éléments proposés à l'utilisateur A pour produire le défi destiné à l'utilisateur B peuvent être conditionnés par différents paramètres et être adaptés par exemple à l'utilisateur A, et/ou au destinataire B du message, etc. comme détaillé ultérieurement.

Sur réception de la validation de l'utilisateur A, le module de définition de défi de l'application APPL insère les métadonnées META définissant relativement au contenu multimédia CONT le défi, la réponse attendue au défi, la durée maximale fixée pour répondre au défi, et le nom ou tout autre identifiant permettant d'identifier un terminal du destinataire B (ex. numéro de téléphone présent dans la liste de contacts ou saisi par l'utilisateur A) dans un message M (étape E116).

Dans le mode de réalisation décrit ici, le message M est une requête HTTP de type POST destinée au serveur 4. Le module de définition de défi insère également ici le contenu multimédia CONT sélectionné par l'utilisateur A dans le message M s'il est stocké sur le terminal 2 pour le transmettre simultanément aux métadonnées. Il convient de noter que le contenu multimédia est inséré le cas échéant sous forme binaire dans la requête POST.

Plus généralement, dans le mode de réalisation décrit ici, le module de définition de défi insère des données d'accès au contenu multimédia CONT dans le message M (ici par exemple, l'url sélectionnée par l'utilisateur A à l'étape E113). Par données d'accès on entend ici soit le contenu multimédia lui-même, soit des données telles que par exemple une adresse une URL permettant d'accéder au contenu multimédia sur une entité locale ou distante.

Dans un autre mode de réalisation, le message M est une requête HTTP de type GET dans laquelle sont insérées les métadonnées. Le contenu multimédia ou plus généralement les données d'accès au contenu multimédia est (sont) quant à lui (elles) envoyé(es) au serveur 4 dans une requête HTTP de type POST après envoi par le serveur d'un identifiant au terminal 2 lui permettant d'associer les métadonnées au contenu multimédia transmis par le terminal 2 et que le terminal 2 passe en paramètre de la requête HTTP POST dans laquelle est(sont) envoyé(es) le contenu multimédia ou les données d'accès à ce contenu.

Dans un autre mode de réalisation encore, les métadonnées et/ou les données d'accès au contenu multimédia peuvent être envoyées dans des messages conformes à d'autres types de format, comme par exemple dans un message SMS ou MMS, etc.

Ceci clôture l'étape de construction E110 du message M par le module de définition de défi de l'application APPL installée sur le terminal 2, réalisée en interagissant avec l'utilisateur A par l'intermédiaire des pages de l'interface graphique UI.

Le message M est ensuite envoyé par l'application APPL au serveur 4, via le réseau de télécommunications NW1, en se servant de l'adresse de contact @oC4 configurée dans l'application APPL (étape E120).

Le serveur 4 extrait du message M l'identifiant (ex. nom) du destinataire B. Il vérifie à l'aide de cet identifiant si l'utilisateur B est enregistré et a souscrit au service S en interrogeant la base de données 5 (étape E130).

Si l'utilisateur B est enregistré, cela signifie que son terminal est équipé d'un module de présentation de défi émis dans le cadre du service S (c'est-à-dire ici de l'application APPL). On suppose ici que l'utilisateur B n'est pas enregistré dans la base de données 5, i.e. qu'il n'a pas souscrit auprès du serveur 4 au service S, et donc qu'il n'est pas équipé d'un module de présentation de défi émis dans le cadre du service S (apte à interpréter notamment les métadonnées contenues dans le message M).

Dans ce cas, le serveur 4 stocke dans sa mémoire volatile 4D le message M.

Puis il détermine à partir du nom du destinataire B inclus dans le message M et de la liste des contacts de l'utilisateur A stockée dans la base de données 5, le numéro de téléphone de l'utilisateur B sur le réseau de télécommunications mobile NW1. Il envoie ensuite au terminal 3, en utilisant le numéro de téléphone ainsi déterminé, un message INVIT l'invitant à installer l'application APPL, et à souscrire auprès de lui au service S (étape E140). Ce message INVIT est un message d'invitation à télécharger l'application APPL à partir d'un lien (ex. une URL (Uniform Resource Locator)) spécifié dans le message.

Dans le mode de réalisation décrit ici, le message d'invitation INVIT est envoyé par le serveur 4 au terminal 3 via un serveur SMS 6, apte à gérer l'envoi et la réception de messages SMS sur le réseau de télécommunications mobile NW1.

Dans une variante de réalisation, le numéro de téléphone du destinataire B du message M est fourni dans le message M par l'application APPL à partir de la liste des contacts stockés sur le terminal 2.

Dans un autre mode de réalisation, le serveur 4 identifie les contacts de l'utilisateur A qui ne sont pas enregistrés dans la base de données 5 et n'ont pas souscrit au service S (et donc qui ne sont pas équipés de l'application APPL) dès la transmission au cours de l'étape E80 de la liste des contacts de l'utilisateur A au serveur 4 par le terminal 2. Il en est de même de l'envoi du message d'invitation à télécharger l'application APPL aux contacts non enregistrés ainsi identifiés.

Sur réception du message d'invitation INVIT, l'utilisateur B télécharge l'application APPL dans une mémoire de son terminal 3, à partir de l'URL spécifiée dans le message INVIT (étape E150). Une fois installée, l'application APPL du terminal 3 envoie un message au serveur 4 pour lui signaler le succès de l'installation et procéder à l'enregistrement de l'utilisateur B (étape E160). Cet enregistrement est réalisé comme décrit précédemment pour l'utilisateur A (cf. étapes E10 à E100).

A l'issue de cet enregistrement, le serveur 4 a sauvegardé dans la base de données 5 le nom de l'utilisateur B en association avec son numéro de téléphone sur le réseau NW1 et sa liste de contacts (étape E170).

Si l'utilisateur B n'installe pas l'application APPL sur son terminal 3 suite à l'invitation du serveur 4, le serveur 4 efface le message M à l'issue d'une temporisation prédéterminée déclenchée suite à l'envoi du message d'invitation INVIT. Un message peut être en outre envoyé au terminal 2 de l'utilisateur A afin de l'avertir que le ou les utilisateurs à qui il souhaitait adresser le contenu multimédia n'ont pas exécuté le défi accompagnant ce contenu multimédia et n'ont pas eu accès à celui-ci (voire n'ont pas souhaité adhérer au service S ou installer l'application APPL).

Suite à l'enregistrement de l'utilisateur B auprès du serveur 4, le serveur 4 extrait du message M le contenu multimédia CONT ou le cas échéant les données d'accès au contenu multimédia, lui attribue un identifiant unique ID-CONT et stocke le contenu CONT dans un répertoire de sa mémoire non volatile (espace de stockage du serveur au sens de l'invention) (étape E180). Cette étape de stockage comprend éventuellement l'obtention (ex. téléchargement) du contenu CONT à partir des données d'accès spécifiées dans le message M.

On suppose que le contenu multimédia CONT est maintenant accessible sur ce répertoire via une adresse de type URL @CONT (secondes données d'accès au sens de l'invention).

Le serveur 4 extrait par ailleurs les métadonnées META contenues dans le message M et les mémorise en association avec l'identifiant unique ID-CONT attribué au contenu multimédia CONT et l'identifiant IDB de l'utilisateur destinataire B, dans une base de données de sa mémoire non volatile (étape E180).

Puis dans le mode de réalisation décrit ici, il envoie au terminal 3 de l'utilisateur B une notification visant à informer l'utilisateur B qu'un défi est disponible pour lui sur le serveur 4 (étape E190).

On suppose ici que sur réception de cette notification, l'utilisateur B décide d'accéder au défi. L'application APPL installée sur le terminal 3 émet une requête à cet effet à destination du serveur 4 (étape E200).

Sur réception de cette requête, le serveur 4 envoie un message M' au terminal 3 comprenant les métadonnées META stockées dans sa base de données complétées éventuellement par d'autres métadonnées (formant ainsi des métadonnées META'), ainsi que l'adresse @CONT permettant d'accéder au contenu multimédia CONT stocké dans le répertoire du serveur. L'adresse @CONT peut être insérée dans les métadonnées META'.

Dans un autre mode de réalisation, le message M' comprend le contenu multimédia CONT.

Le message M' est ici une requête conforme au format JSON (JavaScript Object Notation), qui de façon connue en soi, est un format de données textuelles générique dérivé de la notation des objets du langage JavaScript.

En variante, d'autres formats de messages peuvent bien entendu être envisagés.

Le serveur envoie alors le message M', via le réseau NW1, au terminal 3 (étape E210).

Sur réception du message M', l'application APPL du terminal 3 extrait les métadonnées META' incluses dans le message M' et télécharge le contenu multimédia CONT à partir de l'adresse URL @CONT spécifiée dans ces métadonnées META' (étapes E220/E230).

Le contenu multimédia CONT est stocké par l'application APPL dans la mémoire non volatile du terminal 3.

Puis le module de présentation de défi de l'application APPL analyse et interprète les métadonnées META' contenues dans le message M' pour présenter (i.e. pour exécuter) le défi défini par l'utilisateur A à l'utilisateur B sur son terminal 3.

Plus spécifiquement, lors de la présentation du défi, le module de présentation de défi présente une succession de pages d'interface utilisateur (i.e. de l'interface UI de l'application APPL dans l'exemple envisagé ici).

La mise en page d'une de ces pages d'interface utilisateur utilisées pour la présentation du défi est de préférence prédéfinie à partir d'un modèle d'interface utilisateur ou patron (en anglais « template »). La disposition et la taille des éléments (ex. texte composant le défi à proprement parler, contenu multimédia tronqué ou masqué, etc.) apparaissant sur chaque page ainsi que la succession des différentes pages sont prédéfinies pour un type de défi donné, de sorte que seul l'élément devant être présenté à l'endroit choisi sur une page pour cet élément a besoin d'être spécifié pour que le défi puisse être présenté par le module de présentation de défi à l'utilisateur B sous une forme compréhensible et utilisable. Cet élément est identifié selon une codification commune à la codification utilisée dans les métadonnées META définissant le défi. Autrement dit, chaque élément devant être présenté sur chaque page d'interface utilisateur lors de présentation du défi est extrait par le module de présentation de défi des métadonnées META.

A réception des métadonnées META', le ou les patrons de pages d'interface utilisateur associé au type de jeu identifié dans ces métadonnées sont donc utilisés par le module de présentation de défi de l'application APPL, et modifiés à partir des métadonnées META' de sorte à générer une ou des pages d'interface utilisateur pour présenter à l'utilisateur B le défi auquel il doit répondre sur son terminal 3 (étape E240).

La **figure 6H** illustre un exemple d'une page d'interface utilisateur qui peut être présentée par le module de présentation du défi de l'application APPL à l'utilisateur B lors de la présentation du défi, via l'interface graphique UI.

Le défi est ici constituée d'une photographie masquée à laquelle est associée la question Q2 et trois réponses possibles LOC1, LOC2 et LOC3, la réponse attendue définie dans les métadonnées META' étant la réponse LOC2. La photographie masquée est générée par le module de présentation de défi à partir du contenu multimédia CONT en appliquant le même algorithme de masquage que celui implémenté par le module de définition de défi.

Si l'utilisateur B ne fournit pas via son terminal 3 de réponse à ce défi ou une réponse distincte de la réponse attendue contenue dans les métadonnées META', le module de présentation de défi de l'application APPL refuse de restituer le contenu multimédia CONT dans son intégralité à l'utilisateur B (i.e. de l'afficher) et efface le contenu multimédia CONT stocké dans la mémoire non volatile du terminal 3. Il peut en outre afficher une page d'interface utilisateur indiquant à l'utilisateur B qu'il a échoué à fournir une bonne réponse au défi de l'utilisateur A.

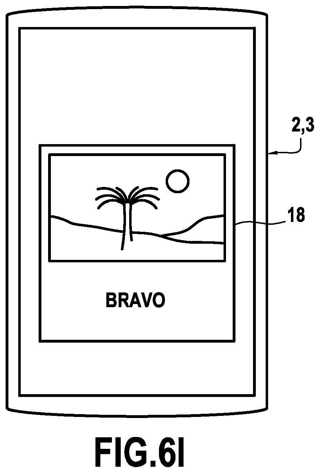

En revanche, si l'utilisateur B fournit via son terminal 3 la réponse attendue au défi (LOC2 ici), le module de présentation de défi de l'application APPL restitue sur l'écran de son terminal 3, dans une page d'interface utilisateur, le contenu multimédia CONT sélectionné par l'utilisateur A (étape E250), comme illustré par exemple à la **figure 6I****.**

Dans le mode de réalisation décrit ici, le module de présentation de défi de l'application APPL installée sur le terminal 3 est configuré de sorte à rapporter, dans un message envoyé au serveur 4, l'échec ou au contraire le succès de l'utilisateur B à fournir la réponse attendue au défi (étape E260).

Dans une variante de réalisation, selon le défi envoyé à l'utilisateur B par l'utilisateur A, le message peut également contenir un score obtenu par l'utilisateur B lorsqu'il a fourni sa réponse au défi.

Sur réception du message de rapport du terminal 3, le serveur 4 met à jour un score attribué à l'utilisateur B et mémorisé dans la base de données 5. Ce score est mis à jour ici à chaque envoi d'un défi à l'utilisateur B (étape E270). Par exemple, il est incrémenté à chaque fois que l'utilisateur B répond avec succès au défi proposé par l'utilisateur A. Ce score permet, dans le mode de réalisation décrit ici, d'établir un classement entre les utilisateurs enregistrés auprès du serveur 4 et ayant souscrit au service S, ou en variante, entre les utilisateurs présents dans la liste de contacts de l'utilisateur A.

Ce classement est envoyé à l'utilisateur B par le serveur 4 sur son terminal 3 (étape E280). Il convient de noter que le classement ou le score courant de l'utilisateur B maintenu par le serveur 4 peut être en outre transmis dans les métadonnées META' lorsque le serveur 4 a un nouveau défi pour l'utilisateur B.

Il peut être en variante ou en complément être envoyé également à l'utilisateur A sur son terminal 2.

Dans une variante de réalisation, si un échec de l'utilisateur B à fournir la réponse attendue au défi est signalé par le terminal 3 au serveur 4, ce dernier peut débloquer, avec l'accord de l'utilisateur A, la restitution du contenu multimédia CONT à l'utilisateur B sur son terminal 3.

Dans une autre variante de réalisation, un tel déblocage est suivi d'une décrémentation du score de l'utilisateur B maintenu par le serveur 4.

Dans une autre variante de réalisation encore, un score est également maintenu au niveau du serveur 4 pour l'utilisateur A en tant que producteur de défis : chaque défi produit par l'utilisateur A résulte en une incrémentation de son score.

Dans le mode de réalisation décrit ici, en fonction du score obtenu par l'utilisateur B (soit à un défi particulier, soit sur l'ensemble des défis auxquels il a participé ou une sélection prédéterminée de ces défis), le serveur 4 envoie en outre un message à l'application APPL installée sur le terminal 2 pour qu'une mise à jour du catalogue d'éléments proposés à l'utilisateur A pour produire les défis destinés à l'utilisateur B soit réalisée (étape E290). Cette mise à jour (étape E300) peut comprendre par exemple le déblocage de nouveaux éléments (ex. de nouveaux défis ou catégories de défis, ou des éléments permettant de rendre plus complexes les défis proposés à l'utilisateur B, etc.). Le catalogue d'éléments proposés à l'utilisateur A est ainsi avantageusement adapté à l'utilisateur B. Une adaptation similaire est réalisée sur le terminal 3.

On notera que le service S d'échange de messages « ludiques » qui vient d'être décrit peut être utilisé de façon autonome ou être intégré dans un autre service, comme par exemple une suite de communication, telle que RCS ou « Joyn ® » ou bien encore un réseau social en ligne tel que « Facebook ® ». Dans ce cas, l'interface utilisateur graphique du module de définition de défi et du module de présentation de défi implémentés par l'application APPL peut être également intégrée dans l'interface graphique de la suite de communication enrichie ou du réseau social en ligne et les messages M, INVIT et M' échangés entre les différentes entités du système 1 peuvent l'être selon un format de message accepté par la suite de communication enrichie ou par le réseau social en ligne.

## Revendications

1. Procédé de réception par un terminal (3) d'un message (M') en provenance d'un serveur (4), via un réseau de télécommunications, ce message comprenant des métadonnées (META) définissant relativement à au moins un contenu multimédia un défi à présenter, à un utilisateur (B) du terminal (3), une réponse attendue à ce défi, et des données d'accès (@CONT) audit au moins un contenu multimédia sur ledit serveur, lesdites métadonnées regroupant les informations requises pour l'exécution dudit défi sur ledit terminal (3), le procédé de réception comprenant :
- une étape de téléchargement (E220, E230) dudit au moins un contenu multimédia à partir desdites données d'accès ;
- une étape de présentation du défi (E240, E250) défini par les métadonnées par un module de présentation de défi installé sur le terminal (3), cette étape de présentation comprenant :
o une étape de présentation (E240) à l'utilisateur (B) du terminal (3) d'au moins une page d'interface utilisateur avec le défi ;
o une étape d'obtention d'une réponse de l'utilisateur (B) à ce défi ;
o une étape de vérification d'une correspondance entre la réponse obtenue de l'utilisateur (B) et la réponse attendue au défi définie dans les métadonnées ; et
o une étape de restitution ou non dudit contenu multimédia dans son intégralité selon que la réponse obtenue de l'utilisateur (B) correspond ou non à la réponse attendue au défi.

2. Procédé de réception selon la revendication 1, **caractérisé en ce que** ledit défi propose une restitution partielle dudit contenu multimédia ou une restitution d'une version transformée dudit contenu multimédia, ledit contenu multimédia dans son intégralité étant fourni à l'utilisateur destinataire en cas de résolution avec succès du défi.

3. Procédé de réception selon la revendication 1 ou 2 **caractérisé en ce que** ledit au moins un contenu multimédia est téléchargé auprès du serveur (4) uniquement lorsque l'utilisateur (B) dudit terminal (3) envisage d'exécuter ledit défi, en préalable de cette exécution.

4. Terminal (3) d'un utilisateur dit destinataire (B) comprenant :
- un module de réception d'un message en provenance d'un serveur, via un réseau de télécommunications, ledit message comprenant des données d'accès à au moins un contenu multimédia sur le serveur et des métadonnées, lesdites métadonnées définissant relativement audit au moins un contenu multimédia un défi à présenter à l'utilisateur destinataire (B), une réponse attendue à ce défi et des données d'accès (@CONT) audit au moins un contenu multimédia sur ledit serveur, lesdites métadonnées regroupant les informations requises pour l'exécution de ce défi sur ledit terminal ;
- un module de téléchargement dudit au moins un contenu multimédia à partir desdites données d'accès ;
- un module de présentation de défi apte à analyser et interpréter les métadonnées pour :
o présenter à l'utilisateur destinataire au moins une page d'interface utilisateur avec le défi ;
∘ obtenir une réponse de l'utilisateur destinataire à ce défi ;
o vérifier une correspondance entre la réponse obtenue de l'utilisateur destinataire et la réponse attendue au défi définie dans les métadonnées ; et
o restituer ou non ledit contenu multimédia dans son intégralité selon si la réponse obtenue de l'utilisateur destinataire correspond ou non à la réponse attendue au défi.

5. Système (1) comprenant :
a/ un terminal (2) d'un utilisateur (A) émetteur d'un message comprenant :
- un module de sélection d'au moins un contenu multimédia et d'au moins un utilisateur destinataire (B), le contenu multimédia et l'utilisateur destinataire (B) étant sélectionnés via un interface utilisateur du terminal (2) ;
- un module de définition de défi apte à construire ledit message, à partir d'au moins une interaction avec un utilisateur émetteur (A), le module de définition de défi étant apte :
o à produire des métadonnées définissant relativement audit au moins un contenu multimédia un défi à présenter audit au moins un utilisateur destinataire (B) et une réponse attendue à ce défi, lesdites métadonnées regroupant les informations requises pour l'exécution dudit défi sur au moins un terminal (3) dudit au moins utilisateur destinataire (3), ledit défi et ladite réponse attendue étant définis par des interactions entre l'utilisateur émetteur (A) et un interface utilisateur de son terminal (2) ; et
o à insérer dans le message les métadonnées et un identifiant servant à identifier ledit au moins un terminal (3) dudit au moins un utilisateur destinataire (B);
- un module d'envoi du message et de données d'accès audit au moins un contenu multimédia via un réseau de télécommunications à un serveur (4) apte à retransmettre les métadonnées et ledit au moins un contenu multimédia audit au moins un terminal (3) dudit au moins un utilisateur destinataire (B), ledit au moins un terminal (3) dudit utilisateur destinataire (B) étant conforme à la revendication 4 ; et
b/ un serveur (4) comprenant :
- un module de réception, apte à recevoir en provenance dudit terminal (2) de l'utilisateur émetteur (A), via le réseau de télécommunications :
o lesdites premières données d'accès audit au moins un contenu multimédia ; et
o ledit message;
- un module de stockage apte à stocker ledit au moins un contenu multimédia dans un espace de stockage du serveur (4) ; et
- un module d'envoi, audit au moins un terminal (3) dudit utilisateur destinataire (B), d'un message comprenant les métadonnées et des secondes données d'accès audit au moins un contenu multimédia stocké sur le serveur (4).

6. Procédé de construction d'un message (M) par un terminal (2) d'un utilisateur émetteur (A), le procédé comprenant :
- une étape d'obtention (E112, E113) d'une identification d'au moins un contenu multimédia (CONT) et d'au moins un utilisateur destinataire (B), le contenu multimédia et l'utilisateur destinataire étant sélectionnés via une interface utilisateur du terminal (2) ;
- une étape de construction (E110) du message par un module de définition de défi (APPL) installé sur le terminal, à partir d'au moins une interaction avec un utilisateur émetteur (A), cette étape de construction comprenant :
o une étape de production (E115) de métadonnées (META) définissant relativement audit au moins un contenu multimédia un défi à présenter audit au moins un utilisateur destinataire (B) et une réponse attendue à ce défi, lesdites métadonnées regroupant les informations requises pour l'exécution dudit défi sur au moins un terminal (3) dudit au moins utilisateur destinataire (B), ledit défi et ladite réponse attendue étant définis par des interactions entre l'utilisateur émetteur (A) et un interface utilisateur dudit terminal (2), ledit au moins terminal (3) dudit au moins utilisateur destinataire (B) mettant en oeuvre un procédé de réception selon l'une quelconque des revendications 1 à 3 ; et
o une étape d'insertion (E116) dans le message des métadonnées et d'un identifiant (IDB) servant à identifier ledit au moins un terminal (3) dudit au moins un utilisateur destinataire (B) du message ;
- une étape d'envoi (E120) du message (M) et de données d'accès audit au moins un contenu multimédia (CONT) par le terminal, via un réseau de télécommunications, à un serveur (4) apte à retransmettre lesdites métadonnées et ledit au moins un contenu multimédia à au moins un dit terminal (3) dudit au moins un utilisateur destinataire.

7. Procédé de construction selon la revendication 6 dans lequel les métadonnées comprennent :
- un type de défi ; et
- des paramètres du défi à présenter.

8. Procédé de construction selon la revendication 6 ou 7 dans lequel les métadonnées servent à identifier au moins une opération à exécuter suite à la présentation du défi par le terminal dudit au moins un utilisateur destinataire selon qu'une réponse fournie par ledit au moins un utilisateur destinataire correspond ou non à ladite réponse attendue.

9. Procédé de construction selon l'une quelconque des revendications 6 à 8 dans lequel les métadonnées comprennent une durée maximale pour fournir une réponse au défi suite à une présentation dudit défi à un dit utilisateur destinataire.

10. Procédé de traitement d'un message mis en oeuvre par un serveur (4), ce procédé comprenant :
- une étape de réception (E120) en provenance d'un terminal (2) d'un utilisateur émetteur (A), via un réseau de télécommunications, d'un message (M) et de premières données d'accès à au moins un contenu multimédia (CONT), ledit message comprenant un identifiant (IDB) servant à identifier au moins un terminal (3) d'au moins un utilisateur destinataire (B) et des métadonnées (META) définissant relativement audit au moins un contenu multimédia un défi à présenter audit au moins un utilisateur destinataire (B) et une réponse attendue à ce défi, lesdites métadonnées regroupant les informations requises pour l'exécution dudit défi sur ledit au moins un terminal (3) dudit au moins utilisateur destinataire (B), ledit au moins un terminal (3) dudit au moins un utilisateur destinataire (B) mettant en oeuvre un procédé de réception selon l'une quelconque des revendications 1 à 3;
- une étape de stockage (E180) dudit au moins un contenu multimédia dans un espace de stockage du serveur ; et
- une étape d'envoi (E210), via ledit réseau, audit au moins dit terminal (3) dudit au moins un utilisateur destinataire (B) d'un message comprenant les métadonnées (META) et des secondes données d'accès audit au moins un contenu multimédia stocké sur le serveur.

11. Procédé de traitement selon la revendication 10 comprenant :
- une étape de vérification (E130) que le terminal (3) dudit au moins un utilisateur destinataire (B) du message est équipé d'un module de présentation de défi apte à présenter le défi défini par les métadonnées audit au moins un utilisateur destinataire (B);
- si le terminal (3) dudit au moins un utilisateur destinataire (B) n'est pas équipé du module de présentation de défi, une étape d'envoi (E140) d'un message (INVIT) invitant ce terminal à installer ce module de présentation de défi (APPL) ;
le message comprenant les métadonnées étant envoyé audit au moins un terminal (3) lorsque le module de présentation de défi est installé sur celui-ci.

12. Procédé de traitement selon la revendication 10 ou 11 comprenant, après l'étape d'envoi des métadonnées, une étape de réception (E260) d'un message en provenance du terminal (3) d'un dit utilisateur destinataire (B) rapportant un échec ou un succès dudit utilisateur destinataire (B) à fournir la réponse attendue au défi lors de la présentation de ce défi par ledit terminal.

13. Procédé de traitement selon la revendication 12 comprenant une étape (E270) de mise à jour d'un score associé audit au moins un destinataire en fonction de l'échec ou du succès rapporté dans le message reçu du terminal de l'utilisateur destinataire.

14. Programme d'ordinateur comportant des instructions pour l'exécution des étapes du procédé de construction d'un message selon l'une quelconque des revendications 6 à 9 ou du procédé de traitement selon la revendication l'une quelconque des revendications 10 à 13 ou du procédé de réception d'un message selon l'une quelconque des revendications 1 à 3 lorsque ledit programme est exécuté par un ordinateur.

15. Support d'enregistrement lisible par un ordinateur sur lequel est enregistré un programme d'ordinateur comprenant des instructions pour l'exécution des étapes du procédé de construction d'un message selon l'une quelconque des revendications 6 à 9, ou du procédé de traitement selon l'une quelconque des revendications 10 à 13 ou du procédé de réception d'un message selon l'une quelconque des revendications 1 à 3.

## Patentansprüche

1. Verfahren zum Empfangen, durch ein Endgerät (3), einer Nachricht (M') von einem Server (4) über ein Telekommunikationsnetzwerk, wobei diese Nachricht Metadaten (META) beinhaltet, die in Bezug auf mindestens einen Multimedia-Inhalt eine Herausforderung, die einem Nutzer (B) des Endgeräts (3) angezeigt werden soll, eine auf diese Herausforderung erwartete Antwort und Zugangsdaten (@CONT) zu dem mindestens einen Multimedia-Inhalt auf dem Server definieren, wobei die Metadaten die zur Ausführung der Herausforderung auf dem Endgerät (3) erforderlichen Informationen enthalten, wobei das Empfangsverfahren Folgendes beinhaltet:
- einen Schritt des Herunterladens (E220, E230) des mindestens einen Multimedia-Inhalts mit Hilfe der Zugangsdaten;
- einen Schritt des Anzeigens der Herausforderung (E240, E250), die durch die Metadaten definiert wird, durch ein Modul zum Anzeigen der Herausforderung, das auf dem Endgerät (3) installiert ist, wobei dieser Schritt des Anzeigens Folgendes beinhaltet:
o einen Schritt des Anzeigens (E240), für den Nutzer (B) des Endgeräts (3), mindestens einer Nutzerschnittstellenseite mit der Herausforderung;
o einen Schritt des Erhaltens einer Antwort des Nutzers (B) auf diese Herausforderung;
o einen Schritt des Überprüfens einer Übereinstimmung zwischen der von dem Nutzer (B) erhaltenen Antwort und der auf die Herausforderung erwarteten Antwort, die in den Metadaten definiert ist; und
o einen Schritt des Wiedergebens oder des Nichtwiedergebens des gesamten Multimedia-Inhalts, je nachdem, ob die von dem Nutzer (B) erhaltene Antwort der auf die Herausforderung erwarteten Antwort entspricht oder nicht.

2. Empfangsverfahren nach Anspruch 1, **dadurch gekennzeichnet, dass** die Herausforderung eine partielle Wiedergabe des Multimedia-Inhalts oder eine Wiedergabe einer veränderten Version des Multimedia-Inhalts anbietet, wobei dem adressierten Nutzer der gesamte Multimedia-Inhalt bereitgestellt wird, wenn die Herausforderung erfolgreich gelöst wird.

3. Empfangsverfahren nach Anspruch 1 oder 2, **dadurch gekennzeichnet, dass** der mindestens eine Multimedia-Inhalt nur dann von dem Server (4) heruntergeladen wird, wenn der Nutzer (B) des Endgeräts (3) vor der Ausführung der Herausforderung plant, diese auszuführen.

4. Endgerät (3) eines sogenannten adressierten Nutzers (B), das Folgendes beinhaltet:
- ein Modul zum Empfangen einer Nachricht von einem Server über ein Telekommunikationsnetzwerk, wobei die Nachricht Daten für den Zugang zu mindestens einem Multimedia-Inhalt auf dem Server und Metadaten beinhaltet, wobei die Metadaten in Bezug auf den mindestens einen Multimedia-Inhalt eine Herausforderung, die dem adressierten Nutzer (B) angezeigt werden soll, eine auf diese Herausforderung erwartete Antwort und Zugangsdaten (@CONT) zu dem mindestens einen Multimedia-Inhalt auf dem Server definieren, wobei die Metadaten die zur Ausführung dieser Herausforderung auf dem Endgerät erforderlichen Informationen enthalten;
- ein Modul zum Herunterladen des mindestens einen Multimedia-Inhalts mit Hilfe der Zugangsdaten;
- ein Modul zum Anzeigen der Herausforderung, das dazu fähig ist, die Metadaten zu analysieren und zu interpretieren, um:
o dem adressierten Nutzer mindestens eine Nutzerschnittstellenseite mit der Herausforderung anzuzeigen;
o eine Antwort des adressierten Nutzers auf diese Herausforderung zu erhalten;
o eine Übereinstimmung zwischen der von dem adressierten Nutzer erhaltenen Antwort und der auf die Herausforderung erwarteten Antwort, die in den Metadaten definiert ist, zu überprüfen; und
o den gesamten Multimedia-Inhalt je nachdem, ob die von dem adressierten Nutzer erhaltene Antwort der auf die Herausforderung erwarteten Antwort entspricht oder nicht, wiederzugeben oder nicht wiederzugeben.

5. System (1), das Folgendes beinhaltet:
a/ ein Endgerät (2) eines Nutzers (A), der eine Nachricht sendet, das Folgendes beinhaltet:
- ein Modul zum Auswählen mindestens eines Multimedia-Inhalts und mindestens eines adressierten Nutzers (B), wobei der Multimedia-Inhalt und der adressierte Nutzer (B) über eine Nutzerschnittstelle des Endgeräts (2) ausgewählt werden;
- ein Modul zum Definieren der Herausforderung, das dazu fähig ist, die Nachricht mit Hilfe mindestens einer Interaktion mit einem sendenden Nutzer (A) zu erstellen, wobei das Modul zum Definieren der Herausforderung zu Folgendem fähig ist:
o Erzeugen von Metadaten, die in Bezug auf den mindestens einen Multimedia-Inhalt eine Herausforderung, die dem mindestens einen adressierten Nutzer (B) angezeigt werden soll, und eine auf diese Herausforderung erwartete Antwort definieren, wobei die Metadaten die zur Ausführung der Herausforderung auf mindestens einem Endgerät (3) des mindestens einen adressierten Nutzers (B) erforderlichen Informationen enthalten, wobei die Herausforderung und die erwartete Antwort durch Interaktionen zwischen dem sendenden Nutzer (A) und einer Nutzerschnittstelle seines Endgeräts (2) definiert werden; und
o Einfügen, in die Nachricht, der Metadaten und einer Kennung, die dazu dient, das mindestens eine Endgerät (3) des mindestens einen adressierten Nutzers (B) zu identifizieren;
- ein Modul zum Senden der Nachricht und von Zugangsdaten zu dem mindestens einen Multimedia-Inhalt über ein Telekommunikationsnetzwerk an einen Server (4), der dazu fähig ist, die Metadaten und den mindestens einen Multimedia-Inhalt an das mindestens eine Endgerät (3) des mindestens einen adressierten Nutzers (B) weiterzuleiten, wobei das mindestens eine Endgerät (3) des adressierten Nutzers (B) Anspruch 4 entspricht; und b/ einen Server (4), der Folgendes beinhaltet:
- ein Empfangsmodul, das dazu fähig ist, von dem Endgerät (2) des sendenden Nutzers (A) über das Telekommunikationsnetzwerk Folgendes zu empfangen:
o die ersten Zugangsdaten zu dem mindestens einen Multimedia-Inhalt; und
o die Nachricht;
- ein Speichermodul, das dazu fähig ist, den mindestens einen Multimedia-Inhalt in einem Speicherplatz des Servers (4) zu speichern; und
- ein Modul zum Senden, an das mindestens eine Endgerät (3) des adressierten Nutzers (B), einer Nachricht, die die Metadaten und zweite Zugangsdaten zu dem mindestens einen, auf dem Server (4) gespeicherten Multimedia-Inhalt beinhaltet.

6. Verfahren zum Erstellen einer Nachricht (M) durch ein Endgerät (2) eines sendenden Nutzers (A), wobei das Verfahren Folgendes beinhaltet:
- einen Schritt des Erhaltens (E112, E113) einer Identifikation mindestens eines Multimedia-Inhalts (CONT) und mindestens eines adressierten Nutzers (B), wobei der Multimedia-Inhalt und der adressierte Nutzer über eine Nutzerschnittstelle des Endgeräts (2) ausgewählt werden;
- einen Schritt des Erstellens (E110) der Nachricht durch ein Modul zum Definieren der Herausforderung (APPL), das auf dem Endgerät installiert ist, mit Hilfe mindestens einer Interaktion mit einem sendenden Nutzer (A), wobei dieser Schritt des Erstellens Folgendes beinhaltet:
o einen Schritt des Erzeugens (E115) von Metadaten (META), die in Bezug auf den mindestens einen Multimedia-Inhalt eine Herausforderung, die dem mindestens einen adressierten Nutzer (B) angezeigt werden soll, und eine auf diese Herausforderung erwartete Antwort definieren, wobei die Metadaten die zur Ausführung der Herausforderung auf mindestens einem Endgerät (3) des mindestens einen adressierten Nutzers (B) erforderlichen Informationen enthalten, wobei die Herausforderung und die erwartete Antwort durch Interaktionen zwischen dem sendenden Nutzer (A) und einer Nutzerschnittstelle des Endgeräts (2) definiert werden, wobei das mindestens eine Endgerät (3) des mindestens einen adressierten Nutzers (B) ein Empfangsverfahren nach einem der Ansprüche 1 bis 3 umsetzt; und
o einen Schritt des Einfügens (E116), in die Nachricht, der Metadaten und einer Kennung (IDB), die dazu dient, das mindestens eine Endgerät (3) des mindestens einen adressierten Nutzers (B) der Nachricht zu identifizieren;
- einen Schritt des Sendens (E120) der Nachricht (M) und von Zugangsdaten zu dem mindestens einen Multimedia-Inhalt (CONT) durch das Endgerät über ein Telekommunikationsnetzwerk an einen Server (4), der dazu fähig ist, die Metadaten und den mindestens einen Multimedia-Inhalt an mindestens ein Endgerät (3) des mindestens einen adressierten Nutzers weiterzuleiten.

7. Erstellungsverfahren nach Anspruch 6, wobei die Metadaten Folgendes umfassen:
- eine Art der Herausforderung; und
- Parameter der anzuzeigenden Herausforderung.

8. Erstellungsverfahren nach Anspruch 6 oder 7, wobei die Metadaten dazu dienen, mindestens eine Operation zu identifizieren, die im Anschluss an das Anzeigen der Herausforderung durch das Endgerät des mindestens einen adressierten Nutzers auszuführen ist, je nachdem, ob eine von dem mindestens einen adressierten Nutzer bereitgestellte Antwort der erwarteten Antwort entspricht oder nicht.

9. Erstellungsverfahren nach einem der Ansprüche 6 bis 8, wobei die Metadaten eine maximale Dauer zum Bereitstellen einer Antwort auf die Herausforderung im Anschluss an ein Anzeigen der Herausforderung für einen von dem mindestens einen adressierten Nutzer beinhalten.

10. Verfahren zum Verarbeiten einer Nachricht, das von einem Server (4) umgesetzt wird, wobei dieses Verfahren Folgendes beinhaltet:
- einen Schritt des Empfangens (E210), von einem Endgerät (2) eines sendenden Nutzers (A) über ein Telekommunikationsnetzwerk, einer Nachricht (M) und von ersten Zugangsdaten zu mindestens einem Multimedia-Inhalt (CONT), wobei die Nachricht eine Kennung (IDB), die dazu dient, mindestens ein Endgerät (3) mindestens eines adressierten Nutzers (B) zu identifizieren, und Metadaten (META), die in Bezug auf den mindestens einen Multimedia-Inhalt eine Herausforderung, die dem mindestens einen adressierten Nutzer (B) angezeigt werden soll, und eine auf diese Herausforderung erwartete Antwort definieren, beinhaltet, wobei die Metadaten die zur Ausführung der Herausforderung auf dem mindestens einen Endgerät (3) des mindestens einen adressierten Nutzers (B) erforderlichen Informationen enthalten, wobei das mindestens eine Endgerät (3) des mindestens einen adressierten Nutzers (B) ein Empfangsverfahren nach einem der Ansprüche 1 bis 3 umsetzt;
- einen Schritt des Speicherns (E180) des mindestens einen Multimedia-Inhalts in einem Speicherplatz des Servers; und
- einen Schritt des Sendens (E210), über das Netzwerk an das mindestens eine Endgerät (3) des mindestens einen adressierten Nutzers (B), einer Nachricht, die die Metadaten (META) und zweite Zugangsdaten zu dem mindestens einen, auf dem Server gespeicherten Multimedia-Inhalt beinhaltet.

11. Verarbeitungsverfahren nach Anspruch 10, das Folgendes beinhaltet:
- einen Schritt des Überprüfens (E130), ob das Endgerät (3) des mindestens einen adressierten Nutzers (B) der Nachricht mit einem Modul zum Anzeigen der Herausforderung ausgerüstet ist, das dazu fähig ist, dem mindestens einen adressierten Nutzer (B) die durch die Metadaten definierte Herausforderung anzuzeigen;
- wenn das Endgerät (3) des mindestens einen adressierten Nutzers (B) nicht mit dem Modul zum Anzeigen der Herausforderung ausgerüstet ist, einen Schritt des Sendens (E140) einer Nachricht (INVIT), die dieses Endgerät auffordert, dieses Modul zum Anzeigen der Herausforderung (APPL) zu installieren;
wobei die Nachricht, die die Metadaten beinhaltet, an das mindestens eine Endgerät (3) gesendet wird, wenn das Modul zum Anzeigen der Herausforderung auf diesem installiert ist.

12. Verarbeitungsverfahren nach Anspruch 10 oder 11, das nach dem Schritt des Sendens der Metadaten einen Schritt des Empfangens (E260) einer Nachricht von dem Endgerät (3) eines adressierten Nutzers (B) beinhaltet, die über einen Misserfolg oder einen Erfolg des adressierten Nutzers (B) berichtet, die auf die Herausforderung erwartete Antwort nach dem Anzeigen dieser Herausforderung durch das Endgerät bereitzustellen.

13. Verarbeitungsverfahren nach Anspruch 12, das einen Schritt (E270) des Aktualisierens eines Scores beinhaltet, der mit dem mindestens einen Adressaten assoziiert ist, in Abhängigkeit von dem Misserfolg oder dem Erfolg, über den in der von dem Endgerät des adressierten Nutzers empfangenen Nachricht berichtet wird.

14. Computerprogramm, das Anweisungen zur Ausführung der Schritte des Verfahrens zum Erstellen einer Nachricht nach einem der Ansprüche 6 bis 9 oder des Verarbeitungsverfahren nach einem der Ansprüche 10 bis 13 oder des Verfahrens zum Empfangen einer Nachricht nach einem der Ansprüche 1 bis 3 beinhaltet, wenn das Programm von einem Computer ausgeführt wird.

15. Computerlesbarer Informationsträger, auf dem ein Computerprogramm aufgezeichnet ist, das Anweisungen zur Ausführung der Schritte des Verfahrens zum Erstellen einer Nachricht nach einem der Ansprüche 6 bis 9 oder des Verarbeitungsverfahren nach einem der Ansprüche 10 bis 13 oder des Verfahrens zum Empfangen einer Nachricht nach einem der Ansprüche 1 bis 3 beinhaltet.

## Claims

1. Method of receiving, by a terminal (3), a message (M') from a server (4), via a telecommunications network, this message comprising metadata (META) defining, in association with at least one multimedia content, a challenge for presenting to a user (B) of the terminal (3), an expected response to this challenge, and access data (@CONT) to said at least one multimedia content on said server, said metadata combining the information required for executing said challenge on said terminal (3), the reception method comprising:
- a step (E220, E230) of downloading said at least one multimedia content on the basis of said access data;
- a step (E240, E250) of presenting the challenge defined by the metadata by a challenge presentation module installed on the terminal (3), this presentation step comprising:
o a step (E240) of presenting, to the user (B) of the terminal (3), at least one user interface page with the challenge;
o a step of obtaining a response from the user (B) to this challenge;
o a step of verifying whether the response obtained from the user (B) matches the expected response to the challenge as defined in the metadata; and
o a step of rendering or not rendering said multimedia content in full depending on whether the response obtained from the user (B) matches or does not match the expected response to the challenge.

2. Reception method according to Claim 1, **characterized in that** said challenge proposes to partially render said multimedia content or to render a transformed version of said multimedia content, said multimedia content in full being supplied to the destination user in the event of successful solving of the challenge.

3. Reception method according to Claim 1 or 2, **characterized in that** said at least one multimedia content is downloaded from the server (4) only once the user (B) of said terminal (3) intends to execute said challenge, before executing it.

4. Terminal (3) of a user, referred to as destination user (B), comprising:
- a module for receiving a message from a server, via a telecommunications network, said message comprising access data to at least one multimedia content on the server and metadata, said metadata defining, in association with said at least one multimedia content, a challenge for presenting to the destination user (B), an expected response to this challenge and access data (@CONT) for accessing said at least one multimedia content on said server, said metadata combining the information required for executing this challenge on said terminal;
- a module for downloading said at least one multimedia content from said access data;
- a challenge presentation module suitable for analysing and interpreting the metadata in order to:
o present, to the destination user, at least one user interface page containing the challenge;
o obtain a response from the destination user to this challenge;
o verify whether the response obtained from the destination user matches the expected response to the challenge as defined in the metadata; and
o render or not render said multimedia content in full depending on whether the response obtained from the destination user matches or does not match the expected response to the challenge.

5. System (1) comprising:
a/ a terminal (2) of a sender user (A) sending a message comprising:
- a module for selecting at least one multimedia content and at least one destination user (B), the multimedia content and the destination user (B) being selected via a user interface of the terminal (2);
- a challenge definition module suitable for constructing said message on the basis of at least one interaction with the sender user (A), the challenge definition module being suitable for:
o producing metadata defining, in association with said at least one multimedia content, a challenge for presenting to said at least one destination user (B) and an expected response to this challenge, said metadata combining the information required for executing said challenge on at least one terminal (3) of said at least one destination user (B), said challenge and said expected response being defined by interactions between the sender user (A) and a user interface of his terminal (2); and
o inserting, in the message, the metadata and an identifier used to identify said at least one terminal (3) of said at least one destination user (B);
- a module for sending the message and access data to said at least one multimedia content via a telecommunications network to a server (4) suitable for relaying the metadata and said at least one multimedia content to said at least one terminal (3) of said at least one destination user (B), said at least one terminal (3) of said destination user (B) being in accordance with Claim 4; and
b/ a server (4) comprising:
- a reception module, suitable for receiving, from said terminal (2) of the sender user (A), via the telecommunications network:
o said first access data to said at least one multimedia content; and
o said message;
- a storage module suitable for storing said at least one multimedia content in a storage space of the server (4); and
- a module for sending, to said at least one terminal (3) of said destination user (B), a message comprising the metadata and second access data for accessing said at least one multimedia content stored on the server (4) .

6. Method for the construction of a message (M) by a terminal (2) of a sender user (A), the method comprising:
- a step (E112, E113) of obtaining an identification of at least one multimedia content (CONT) and of at least one destination user (B), the multimedia content and the destination user being selected via a user interface of the terminal (2);
- a step (E110) of constructing the message by a challenge definition module (APPL) installed on the terminal, on the basis of at least one interaction with a sender user (A), this construction step comprising:
o a step (E115) of producing metadata (META) defining, in association with said at least one multimedia content, a challenge for presenting to said at least one destination user (B) and an expected response to this challenge, said metadata combining the information required for executing said challenge on at least one terminal (3) of said at least one destination user (B), said challenge and said expected response being defined by interactions between the sender user (A) and a user interface of said terminal (2), said at least one terminal (3) of said at least one destination user (B) implementing a reception method according to any one of Claims 1 to 3; and
o a step (E116) of inserting, in the message, the metadata and an identifier (IDB) of said at least one terminal (3) of said at least one destination user (B) receiving the message;
- a step (E120) of sending the message (M) and access data to said at least one multimedia content (CONT) by the terminal, using a telecommunications network, to a server (4) configured to relay said metadata and said at least one multimedia content to at least one said terminal (3) of said at least one destination user.

7. Construction method according to Claim 6, wherein the metadata comprise:
- a type of the challenge; and
- parameters of the challenge to be presented.

8. Construction method according to Claim 6 or 7, wherein the metadata are used to identify at least one operation to be executed after presenting the challenge on the terminal of said at least one destination user depending on whether a response supplied by said at least one destination user matches or does not match said expected response.

9. Construction method according to any one of Claims 6 to 8, wherein the metadata comprise a maximum duration for providing a response to the challenge after said challenge has been presented to said destination user.

10. Method for processing a message, implemented by a server (4), this method comprising:
- a step (E120) of receiving, from a terminal (2) of a sender user (A), via a telecommunications network, a message (M) and first access data to at least one multimedia content (CONT), said message comprising an identifier (IDB) of at least one terminal (3) of at least one destination user (B) and metadata (META) defining, in association with said at least one multimedia content, a challenge for presenting to said at least one destination user (B) and an expected response to this challenge, said metadata combining the information required for executing said challenge on said at least one terminal (3) of said at least one destination user (B), said at least one terminal (3) of said at least one destination user (B) implementing a reception method according to any one of Claims 1 to 3;
- a step (E180) of storing said at least one multimedia content in a storage space of the server; and
- a step (E210) of sending, via said network, to said at least one terminal (3) of said at least one destination user (B), a message comprising the metadata (META) and second access data to said at least one multimedia content stored on the server.

11. Processing method according to Claim 10, comprising:
- a step (E130) of verifying that the terminal (3) of said at least one destination user (B) receiving the message is provided with a challenge presentation module suitable for presenting the challenge defined by the metadata to said at least one destination user (B);
- if the terminal (3) of said at least one destination user (B) is not provided with the challenge presentation module, a step (E140) of sending an invitation message (INVIT) to this terminal to install this challenge presentation module (APPL);
the message comprising the metadata being sent to said at least one terminal (3) after the challenge presentation module has been installed thereon.

12. Processing method according to Claim 10 or 11, comprising, after the step of sending the metadata, a step (E260) of receiving a message from the terminal (3) of a said destination user (B) reporting failure or success of said destination user (B) in providing the expected response to the challenge when this challenge is presented by said terminal.

13. Processing method according to Claim 12, comprising a step (E270) of updating a score associated with said at least one destination as a function of the failure or success reported in the message received from the terminal of the destination user.

14. Computer program containing instructions for executing the steps of the method for constructing a message according to any one of Claims 6 to 9 or of the processing method according to any one of Claims 10 to 13 or of the method for receiving a message according to any one of Claims 1 to 3 when said program is executed by a computer.

15. Computer-readable recording medium on which there is recorded a computer program comprising instructions for executing the steps of the method for constructing a message according to any one of Claims 6 to 9 or of the processing method according to any one of Claims 10 to 13 or of the method for receiving a message according to any one of Claims 1 to 3.
